# EUROPEAN PATENT APPLICATION

(11) **EP 2 208 540 A1**
(43) Date of publication of application: **21.07.2010**
(21) Application number: 08842050.0
(22) Date of filing: 23.10.2008
(51) Int. Cl.: B04B 5/02, A61M 1/00, C12M 1/10, C12N 1/02, G01N 1/10, C12N 5/06

(54) **SEPARATION CONTAINER, ATTACHMENT AND SEPARATION METHOD**

(30) Priority: 24.10.2007 JP 2007276718
(71) Applicant: JMS Co., Ltd., Hiroshima-shi Hiroshima 7308652 (JP)
(72) Inventor: ITO, Keiko, Tokyo 153-0061 (JP); HIRAI, Satoshi, Hiroshima 730-8652 (JP); OKITSU, Osamu, Okayama 701-0204 (JP); OKAMOTO, Yasunori, Hiroshima 730-8652 (JP)
(74) Representative: Skuhra, Udo
(86) International application number: PCT/JP2008/069209
(87) International publication number: WO 2009/054441

(57) **Abstract**

A separation container that can prevent the contamination with unnecessary components is provided. A separation container 1 for separating a separation subject from a sample by causing the separation subject to gather on the bottom thereof by centrifugation includes a container main body 11 and a dividing portion. The container main body 11 is a tubular container elongated in the axial direction with an upper end thereof being open and a lower end thereof being the bottom. The dividing portion has a partition 12 formed along the axial direction of the container main body, and an inner space of the container main body 11 is divided into a sample supply chamber 14 and a separation subject discharge chamber 15 by the partition 12. The sample supply chamber 14 and the separation subject discharge chamber 15 communicate with each other via a through hole 13 formed in a lower portion of the partition 12. A collection tube can be inserted into a lower portion of the separation subject discharge chamber 15 from the opening, and the separation subject located in the lower portion of the separation subject discharge chamber 15 can be collected with the collection tube and recovered to the outside of the container main body 11.

## Description

### Technical Field

The present invention relates to a separation container, an attachment, and a separation method.

### Background Art

It generally is said that 50% or more of infertility cases are attributed to defects in males. Male infertility is caused by, for example, defects in spermatogenesis and sexual dysfunction. Examples of male infertility in light of seminal finding include: oligozoospermia, characterized by a low sperm concentration in semen; azoospermia, characterized by total absence of sperms in semen; and asthenozoospermia, characterized by poor motility of sperms. As a remedy for such male infertility, there is a method of attempting to increase the number of sperms through hormone therapy or the like. In the case of obstructive diseases such as varicocele, a surgical therapy such as seminal tract reanastomosis is applied. In the case where these therapies do not take effect or in the case of azoospermia, an assisted reproductive technology (ART) such as artificial insemination (AI), in vitro fertilization (IVF), or intracytoplasmic sperm injection (ICSI) is applied.

Examples of a method for preparing sperms to be used in assisted reproductive technologies include a separation method using density gradient centrifugation (density gradient centrifugation method) and a separation method utilizing the motility of sperms (swim-up method). In the former method, Percoll (registered trademark) is used generally. More specifically, the former is a method in which semen or a testicular tissue is layered on the Percoll, and a density gradient is formed by centrifugation, whereby impurities contained in the semen or the testicular tissue are removed therefrom and only mature sperms are separated in the lowermost layer. In the process of this operation, the sperms are washed and concentrated, whereby the rate of motility and the concentration of the sperms are increased. In the latter method, first, seminal plasma, which is a liquid component of semen excluding sperms, is removed from the semen by centrifugation, whereby the concentration of a solid containing sperms in semen (hereinafter also referred to as "sperm-containing seminal solid") is made high. Subsequently, the supernatant (the seminal plasma) is removed, and thereafter, the sperm-containing seminal solid is caused to sink to the bottom of a container such as a test tube containing a medium. Then, utilizing the fact that only healthy and highly active sperms swim up in the medium to float to an upper portion of the medium with linear motion, mature motile sperms are obtained. According to these methods, by washing and concentrating sperms, it is possible not only to increase the chance of fertilization to achieve improved fertility, but also to remove seminal plasma, unwanted bacteria, and the like that may hinder the fertilization.

However, the density gradient centrifugation method as the former method has a problem in that, when the sperms that have settled down on the bottom of the centrifuge tube are collected by inserting a pipette from an opening in an upper portion of the centrifuge tube, components present in the vicinity of a middle layer of the Percoll might adhere to the pipette, and the sperms might be contaminated with these components. In the vicinity of the middle layer of the Percoll, the seminal plasma or components of the testicular tissue are presence, and also bacteria and viruses are present in some cases. Contamination with the seminal plasma and components of the testicular tissue leads to dilution of the sperms, which might affect the motility of the sperms. Moreover, contamination with bacteria or viruses might affect the safety of a fertilized egg and the resulting child, and also might affect the safety of an operator who conducts the preparation of sperms. For the same reason, they similarly might affect the swim-up method as the latter method. In order to solve this problem, sperm collecting tools to be used in the density gradient centrifugation method have been proposed.

Patent Document 1 discloses a collecting tool formed of a glass centrifuge tube with a bottom portion having a smaller diameter. The bottom portion is provided with a brittle portion that can be broken easily to allow removal of the bottom portion. In this collecting tool, first, sperms are caused to settle down by centrifugation, and then, a rubber dropper is attached over the opening in an upper portion of the collecting tool. Thereafter, the brittle portion on the bottom is snapped to remove the bottom portion, thereby opening a lower end of the collecting tool. Subsequently, the rubber dropper is compressed to generate a positive pressure inside the collecting tool, thereby discharging the sperms that have settled down from the opening in the lower end to the outside. Patent Document 2 discloses an improved version of the collecting tool. This collecting tool has a retainer for protecting the small-diameter bottom portion provided with the brittle portion. However, in the collecting tools disclosed in Patent Documents 1 and 2, sperms are discharged by breaking the brittle portion to remove the bottom portion, and the sperms may be contaminated with broken pieces produced at the time of breaking the brittle portion. Moreover, since these collecting tools require an operation of breaking the brittle portion to remove the bottom portion, an error in the operation might cause the operator to injure his finger or the like.

Patent Document 3 discloses a collecting tool obtained by inserting an inner tube into a container main body. In this collecting tool, the bottom of the inner tube is open, and this opening is closed by a plug at the time of centrifugation. In the state where the opening of the inner tube is closed by the plug, Percoll is poured between the container main body and the inner tube, and a sample is layered on the Percoll. Then, sperms are caused to settle down on the bottom of the container main body by centrifugation. Thereafter, a pipette is inserted into the inner tube. The plug is pushed toward the container main body side with the tip of the pipette until it is detached. The tip of the pipette is moved to the bottom of the container main body, and the sperms are collected by aspirating them into the pipette. Furthermore, Patent Document 4 discloses an improved version of the collecting tool. In this collecting tool, the tip of the plug is sharpened, so that, when the plug drops off from the opening in the lower end of the inner tube to the bottom of the container main body, the plug falls down either to the left side or the right side relative to the position where it dropped. In the improved collecting tool, a pipette can be inserted into the bottom of the container main body without being obstructed by the plug that has dropped off. However, in the collecting tools disclosed in Patent Documents 3 and 4, the opening at the lower end of the inner tube is closed by the plug, and there is a risk that the plug might drop off owing to a centrifugal force generated at the time of centrifugal treatment.

Patent Document 5 discloses a collecting tool obtained by disposing a collection tube in a centrifuge tube. In this collecting tool, after centrifugation, a syringe is connected to the collection tube, and sperms that have settled down on the bottom of the centrifuge tube are collected by aspirating them into the syringe. However, in this collecting tool, the collection tube is supported only at one point, so that there is a risk that the collection tube might drop off owing to a centrifugal force at the time of centrifugation. Moreover, since the tip of the collection tube is located at the bottom of the centrifuge tube, there is a risk that sperms might be damaged physically by the tip of the collection tube at the time of centrifugation.

Patent Document 6 discloses a collecting tool in which a tube body with its fore end and rear end being open is disposed in a bottomed tube in a detachable manner. In this collecting tool, Percoll is added to the bottomed tube and the tube body, and a sample is layered on the Percoll in the tube body lying inside. The collecting tool then is centrifuged, thereby causing sperms to settle down on the bottom of the outer bottomed tube. Then, after the tube body is removed, the sperms on the bottom of the bottomed tube are collected with a pipette. However, this collecting tool requires a cumbersome operation of detaching the tube body.

The problems in these collecting tools occur in preparation of sperms to be used in assisted reproductive technologies. However, these problems also arise in the fields involving separation of a subject to be separated (hereinafter simply referred to as "separation subject") from a sample by centrifugation.
[Patent Document 1] JP 2000-288082 A
[Patent Document 2] JP 2006-305237 A
[Patent Document 3] JP 9(1997)-285740 A
[Patent Document 4] JP 2001-46915 A
[Patent Document 5] JP 2004-313500 A
[Patent Document 6] WO 2005/030399 A1

### Disclosure of Invention

With the foregoing in mind, it is an object of the present invention to provide a separation container that can prevent contamination with unnecessary components, is free from the dropping of its members at the time of centrifugation, is excellent in safety, and can separate a separation subject from a sample with simple operations.

In order to achieve the above object, a separation container according to the present invention is a separation container for separating a separation subject from a sample by causing the separation subject to gather on a bottom of the separation container by centrifugation, including:
a container main body; and
a dividing portion,
wherein the container main body is a tubular container that is elongated in an axial direction with an upper end thereof being open and a lower end thereof being a bottom,
the dividing portion has a partition formed along the axial direction of the container main body,
an inner space of the container main body is divided into two or more chambers by the partition,
at least one of the two or more chambers formed by the division of the inner space by the partition is a sample supply chamber,
at least one remaining chamber is a separation subject discharge chamber,
the sample supply chamber and the separation subject discharge chamber can communicate with each other in lower portions thereof,
the separation container is configured so that a centrifugal treatment solution can be added to the sample supply chamber and the separation subject discharge chamber,
the separation container is configured so that a collection tube can be inserted into the separation subject discharge chamber from the opening, and
the separation subject in the separation subject discharge chamber can be collected with the collection tube and recovered to an outside of the container main body.

As described above, in the separation container according to the present invention, the inner space of the container is divided into two chambers, namely, the sample supply chamber and the separation subject discharge chamber by the dividing portion, and these chambers can communicate with each other in the lower portions thereof. Therefore, when a sample is placed in the sample supply chamber and is subjected to centrifugation, the separation subject settles down in a lower portion of the separation container main body, i.e., in the lower portions of both the sample supply chamber and the separation subject discharge chamber, or in the lower portion of at least the separation subject discharge chamber. When the sample contains unnecessary components, in the centrifugation, the sample-derived unnecessary components are present in, for example, an upper layer or a middle layer in the sample supply chamber, whereas the sample-derived unnecessary components are not present in the separation subject discharge chamber. Therefore, by inserting a collection tube into the separation subject discharge chamber and collecting and recovering the separation subject that has settled down therein, it is possible to obtain the separation subject while preventing contamination with unnecessary components such as impurities derived from the sample, and the like. Furthermore, according to the separation container of the present invention, it is possible to concentrate the separation subject in the sample. By using the separation container according to the present invention in, for example, washing and concentration of sperms, it is possible to obtain concentrated sperms while preventing the contamination with impurities such as bacteria and unnecessary components derived from semen or a testicular tissue. Moreover, the separation container according to the present invention is applicable to the swim-up method as will be described later. When the separation container of the present invention is applied to the swim-up method, first, a sample is supplied to a sample supply chamber and then is subjected to centrifugation. As a result of the centrifugation, mature sperms settle down in the lower portion of the container main body, i.e., the lower portions of both the sample supply chamber and the separation subject discharge chamber or the lower portion of at least the separation subject discharge chamber. Although impurities derived from the sample are present in the sample supply chamber, the separation subject discharge chamber is free from impurities. Mature sperms swim in the separation subject discharge chamber free from impurities to float up to the upper portion thereof. Thus, by collecting and recovering these mature sperms, it is possible to obtain the mature sperms while preventing the contamination with impurities. Moreover, since the separation container according to the present invention can have a simple and rigid configuration, it is possible to prevent its members from dropping off at the time of centrifugation and to collect and recover a separation subject with simple operations.

### Brief Description of Drawings

[FIG. 1] FIG. 1 is a sectional view showing the configuration of a separation container according to Example 1 of the present invention.
[FIG. 2] FIGs. 2A and 2B are sectional views showing an example of a method for separating sperms from a sample using the separation container of Example 1.
[FIG. 3] FIG. 3 is a front view showing an example of a container main body of a separation container according to Example 2 of the present invention.
[FIG. 4] FIG. 4A is a perspective view of an attachment of Example 2, FIG. 4B is a front view of the attachment of the present example, FIG. 4C is a sectional view taken in the arrow direction of line I-I in FIG. 4A, FIG. 4D is a top view of the attachment of the present example, and FIG. 4E is a perspective view showing another form of the attachment of the present example.
[FIG. 5] FIG. 5A is a front view showing the state where the attachment is inserted into the container main body 100 in Example 2, and FIG. 5B is a sectional view taken in the arrow direction of line I-I in FIG. 4A.
[FIG. 6] FIG. 6A is a perspective view of an attachment of Example 3, FIG. 6B is a front view of the attachment of the present example, FIG. 6C is a sectional view taken in the arrow direction of line I-I in FIG. 6A, and FIG. 6D is a top view of the attachment of the present example.
[FIG. 7] FIG. 7A is a front view showing the state where the attachment is inserted into a container main body 100 in Example 3, and FIG. 7B is a sectional view taken in the arrow direction of line I-I in FIG. 6A.
[FIG. 8] FIG. 8A is a perspective view of an attachment of Example 4, FIG. 8B is a front view of the attachment of the present example, FIG. 8C is a sectional view taken in the arrow direction of line I-I in FIG. 8A, and FIG. 8D is a top view of the attachment of the present example.
[FIG. 9] FIG. 9A is a front view showing the state where the attachment is inserted into a container main body 100 in Example 4, and FIG. 9B is a sectional view taken in the arrow direction of line I-I in FIG. 8A.
[FIG. 10] FIG. 10A is a perspective view of an attachment of Example 5, and FIG. 10B is a sectional view taken in the arrow direction of line I-I in FIG. 10A.
[FIG. 11] FIG. 11 is a sectional view taken in the arrow direction of line I-I in FIG. 10A.
[FIG. 12] FIG. 12A is a sectional view showing the configuration of a separation container according to Example 6 of the present invention, and FIGs. 12B and 12C are sectional views showing an example of a method for separating sperms from a sample using the separation container of Example 6.
[FIG. 13] FIG. 13A is a perspective view of an attachment of Example 6, FIG. 13B is a front view of the attachment of the present example, FIG. 13C is a sectional view taken in the arrow direction of line I-I in FIG. 13A, and FIG. 13D is a top view of the attachment of the present example.
[FIG. 14] FIG. 14A is a front view showing the state where the attachment is inserted into a container main body 100 in Example 6, and FIG. 14B is a sectional view taken in the arrow direction of line I-I in FIG. 13A.
[FIG. 15] FIGs. 15A and 15B are perspective views respectively showing attachments having other configurations in Example 6.
[FIG. 16] FIGs. 16A and 16B are perspective views respectively showing attachments having still other configurations in Example 6.
[FIG. 17] FIG. 17A is sectional view showing the configuration of an attachment according to Example 8 of the present invention, FIG. 17B, 17C and 17D are sectional views showing an example of a method for separating sperms from a sample using the separation container of the present example.
[FIG. 18] FIG. 18A is a perspective view illustrating the configuration of a separation container according to Example 9 of the present invention by showing the state where members thereof are disassembled, and FIG. 18B is a sectional view taken in the arrow direction of line I-I in FIG. 18A.
[FIG. 19] FIG. 19 is a sectional view showing an example of a method for separating sperms from a sample using the separation container of Example 9.
[FIG. 20] FIG. 20 is a sectional view showing an example of a method for separating sperms from a sample using another separation container according to Example 9 of the present invention.

### Best Mode for Carrying Out the Invention

In the present invention, "a sample supply chamber and a separation subject discharge chamber can communicate with each other" encompasses, for example, the state where the sample supply chamber and the separation subject discharge chamber communicate with each other originally via a through hole or the like formed on a partition present therebetween and also the state where the sample supply chamber and the separation subject discharge chamber are provided so as to be isolated from each other completely and adapted to communicate with each other when necessary. In the latter case, a method for allowing the sample supply chamber and the separation subject discharge chamber to communicate with each other is not particularly limited, and examples of the method include perforating the partition between the sample supply chamber and the separation subject discharge chamber with a collection tube such as a pipette.

### <Separation Container>

The separation container according to the present invention is, as described above, a separation container for separating a separation subject from a sample by causing the separation subject to gather on a bottom of the separation container by centrifugation. The separation container includes:
a container main body; and
a dividing portion,
wherein the container main body is a tubular container that is elongated in an axial direction with an upper end thereof being open and a lower end thereof being a bottom,
the dividing portion has a partition formed along the axial direction of the container main body,
an inner space of the container main body is divided into two or more chambers by the partition,
at least one of the two or more chambers formed by the division of the inner space by the partition is a chamber to which the sample is supplied (a sample supply chamber),
at least one remaining chamber is a chamber to which the separation subject is discharged (a separation subject discharge chamber),
the sample supply chamber and the separation subject discharge chamber can communicate with each other in lower portions thereof,
the separation container is configured so that a centrifugal treatment solution can be added to the sample supply chamber and the separation subject discharge chamber,
the separation container is configured so that a collection tube can be inserted into the separation subject discharge chamber from the opening, and
the separation subject in the separation subject discharge chamber can be collected with the collection tube and recovered to an outside of the container main body.

Examples of the separation container according to the present invention include first to fourth separation containers described in the following. It is to be noted, however, the separation container according to the present invention is by no means limited thereto.

The first separation container of the present invention is characterized in that it includes a planar partition having substantially the same shape as a cross sectional shape of an inner space of the container main body.

One embodiment of the first separation container of the present invention is, for example, such that the partition is a planar partition having substantially the same shape as a cross sectional shape of the inner space of the container main body, a through hole is formed in a lower portion of the partition, and the sample supply chamber and the separation subject discharge chamber can communicate with each other via the through hole.

Another embodiment of the first separation container of the present invention is such that, for example, instead of or in addition to the through hole formed in the lower portion of the partition, the separation container has a through hole formed by a lower bottom side of the partition and an inner wall of the container main body. That is, the first separation container of the present invention may be such that, for example, the partition is a planar partition having substantially the same shape as a cross sectional shape of the inner space of the container main body, a height of the partition is shorter than a depth of the container main body, a through hole is formed by a lower bottom side of the partition and an inner wall of the container main body below the lower bottom side of the partition, and the sample supply chamber and the separation subject discharge chamber can communicate with each other via the through hole.

The first separation container of the present invention may be configured so that, for example, the partition is disposed on the sample supply chamber side relative to a center in a radial direction in the container main body, and the partition has a shape inclined from a certain point in a longitudinal direction thereof toward the sample supply chamber side. According to the present embodiment, when the separation container of the present invention is applied to, for example, washing and concentration of sperms by the swim-up method, it is possible further to improve the recovery efficiency of mature sperms.

In the first separation container of the present invention, it is preferable that the dividing portion further includes a partition fixing portion and that the partition is supported and fixed inside the container main body by the partition fixing portion. The dividing portion may be supported and fixed in the container main body by, for example, the partition itself. However, by supporting and fixing the partition additionally using the partition fixing portion, the occurrence of the dropping-off at the time of centrifugation can be prevented more reliably, for example.

The second separation container of the present invention is characterized in that the dividing portion has a first inner container described below.

One embodiment of the second separation container of the present invention is, for example, such that:
the dividing portion has a first inner container,
the inner container is a tubular container that is elongated in an axial direction and has an outer diameter and a height that allow the inner container to be inserted into the container main body,
an upper portion of the inner container is open, and a lower portion of the inner container is open or a through hole is formed in the lower portion of the inner container,
a shape of a part of an outer peripheral surface of the inner container is substantially the same as a shape of a part of an inner peripheral surface of the container main body,
a remaining portion of the outer peripheral surface of the inner container has a flat shape,
a side wall of the inner container with the flat shape is the partition,
the inner container is disposed in the container main body in a state where the part of the outer peripheral surface of the inner container and the part of the inner peripheral surface of the container main body having the same shape are in contact with each other and the portion having the flat shape in the outer peripheral surface of the inner container is apart from a portion of the inner peripheral surface of the container main body other than the same shape part at a certain distance,
the inner container has an inner container fixing portion, and the inner container is supported and fixed in the container main body by the inner container fixing portion,
a chamber inside the inner container is the sample supply chamber, and
a chamber formed by the portion having the flat shape in the outer peripheral surface of the inner container and the portion of the inner peripheral surface of the container main body other than the part in contact with the outer peripheral surface of the inner container is the separation subject discharge chamber.

In the second separation container of the present invention, the portion having the flat shape in the outer peripheral surface of the inner container may have a shape inclined from a certain point in the axial direction toward an inside of the inner container. According to the present embodiment, when the separation container of the present invention is applied to, for example, washing and concentration of sperms by the swim-up method, it is possible to further improve the recovery efficiency of mature sperms.

The third separation container of the present invention is characterized in that the dividing portion has a second inner container described below.

One embodiment of the third separation container of the present invention is, for example, such that:
the dividing portion has a second inner container,
the inner container is a tubular container that is elongated in an axial direction and has an outer diameter smaller than an inner diameter of the container main body and a height smaller than a depth of the container main body,
an upper portion of the inner container is open, and a lower portion of the inner container is open or a through hole is formed in the lower portion of the inner container,
an entire side wall of the inner container is the partition,
the inner container is disposed in the container main body in a state where an outer peripheral surface of the inner container is apart from an inner peripheral surface of the container main body at a certain distance,
the inner container has an inner container fixing portion, and the inner container is supported and fixed in the container main body by the inner container fixing portion,
a chamber inside the inner container is the sample supply chamber, and
a chamber formed by an outer peripheral surface of the inner container and an inner peripheral surface of the container main body is the separation subject discharge chamber.

The fourth separation container of the present invention is characterized in that it has a third inner container described below instead of the dividing portion.

One embodiment of the fourth separation container of the present invention is, for example, such that:
the separation container has a third inner container instead of the dividing portion,
the inner container is a tubular container that is elongated in an axial direction and has an outer diameter and a height that allow the inner container to be inserted into the container main body,
an upper portion of the inner container is open, and a lower portion of the inner container is open or a through hole is formed in the lower portion of the inner container,
a shape of an outer peripheral surface of the inner container is substantially the same as a shape of an inner peripheral surface of the container main body,
when the inner container is inserted into the container main body, the outer peripheral surface of the inner container abuts against the inner peripheral surface of the container main body, whereby the inner container is supported and fixed inside the container main body,
the inner container has a positive pressure generating portion,
the positive pressure generating portion freely can be attached to and detached from the opening in the upper portion of the inner container,
the sample is supplied to the inner container in a state where the inner container is inserted into the container main body, after which the separation subject in the sample is caused to move to the lower portion of the inner container by centrifugation, and in this state, the inner container is taken out from the container main body, after which the separation subject can be discharged from the opening in the lower portion of the inner container by a pressure generated by the positive pressure generating portion.

In the separation container according to the present invention, for example, the partition or the inner container may be supported and fixed in the container main body by inserting the partition fixing portion or the inner container fixing portion entirely into the container main body, for example. Alternatively, the partition or the inner container may be supported and fixed in the container main body by inserting the partition fixing portion or the inner container fixing portion partially into the container main body.

In the separation container according to the present invention, the dividing portion (e.g., the partition, or the first, second, or third inner container) may be, for example, in the form of being integrated with the container main body or may be freely attached to and detached from (attachable to and detachable from) the container main body. In the latter case, it is preferable that an attachment of the present invention to be described later is attached to the container main body as a member having the dividing portion.

In the separation container according to the present invention, the dividing portion further may include a grip portion. It is preferable that the grip portion is exposed to the outside of the container main body when the dividing portion is attached to the container main body, for example. As described above, when the dividing portion can be attached to/detached from the container main body, the operation of attaching/detaching the dividing portion to/from the container main body can be conducted more easily by holding the exposed grip portion.

Preferably, the separation container according to the present invention further include a lid portion that can close the opening at the upper end of the container main body. By providing the lid portion, for example, it is possible more reliably to prevent the centrifugal treatment solution, the sample, and the like added to the separation container from scattering to the outside and also prevent impurities from entering the separation container from the outside.

For example, the lid portion may be in the form of being partially joined to the container main body, or may be a member that is different from the container main body and to be attached to the container main body when it is used. Furthermore, in the case of the second, third, and fourth separation containers having the inner container, the lid portion may be in the form of being attached to the inner container, for example, in addition to the above-described forms. As a specific example, in the case of the second and third separation containers, the lid portion may be in the form of being partially joined to the inner container, or may be a member that is different from the inner container and to be attached to the inner container when it is used, for example. In the case of the fourth separation container, the lid portion may be a member different from the container main body and the inner container and may be attached to the inner container when it is used, for example. The way of attaching the lid portion is not particularly limited, and may be achieved by allowing the lid portion to be screwed in, to mesh with, to be fitted in, or to be in pressure contact with the member on which it is to be attached, for example.

In the separation container according to the present invention, when the first, second, and third inner containers are freely attached to and detached from (attachable to and detachable from) the container main body as described above, it is preferable to take out the inner container from the container main body after centrifugation as will be described later. By taking out the inner container, a collection tube for recovering a separation subject can be inserted into the container main body more easily. This also allows the reduction of the amount of the centrifugal treatment solution to be added to the separation subject discharge chamber of the container main body. At this time, it is preferable that a liquid (e.g., a sample containing impurities or the like) remaining in the sample supply chamber inside the inner container is prevented from entering the centrifugal treatment solution containing a separation subject inside the container main body from the through hole or the opening in the lower portion of the inner container by taking out the inner container, for example. Thus, in the case where such a method is employed, it is preferable that the lid portion is attached, for example, on the inner container and the opening in the upper portion of the inner container, more specifically, the opening in the upper portion of the sample supply chamber, is substantially closed through the contact with the lid portion. According to such an embodiment, the hermetic quality inside the inner container can be maintained, so that it is possible to prevent sufficiently the liquid containing impurities in the sample supply chamber inside the inner container from leaking out from the through hole or the opening in the lower portion of the inner container.

Furthermore, the separation container according to the present invention may have, for example, in its upper portion, a through hole that allows the sample supply chamber to communicate with the outside of the separation container and a through hole that allows the separation subject discharge chamber to communicate with the outside of the separation container. Either one of the former and latter through holes may be provided. However, it is preferable to provide both the through holes. In the case where the separation container according to the present invention has the lid portion, by providing such a through hole(s), it is possible to adjust the pressure inside the sample supply chamber and the pressure inside the separation subject discharge chamber at the time of centrifugation, for example. The through hole may be configured so that, for example, it is closable or the degree by which the through hole is open and closed can be adjusted. By configuring the through hole so as to be openable and closable, the pressure inside the sample supply chamber and the pressure inside the separation subject discharge chamber can be adjust as appropriate when it is necessary. For example, when it is intended to ensure the sample added to the sample supply chamber remains therein, it is preferable to carry out centrifugation with the through hole being closed. Then, after the centrifugation, when the separation subject still remains in the vicinity of the through hole or the opening in the lower portion of the sample supply chamber, it is possible to discharge the remaining separation subject from the sample supply chamber to the separation subject discharge chamber by opening the through hole in the upper portion. On the other hand, for example, when it is intended to achieve equilibrium of the surface of the liquid added to the sample supply chamber and the surface of the liquid added to the separation subject discharge chamber, it is preferable to carry out centrifugation with the upper through hole being open. The through hole may be opened/closed by hand or with fingers, for example, or alternatively, the through hole may be provided with an opening/closing adjustment portion and the degree by which the through hole is open can be adjusted by means of the opening/closing adjustment portion, for example.

Furthermore, when the separation container according to the present invention has the grip portion exposed from the container main body as described above, the above-described through holes may be provided in the grip portion. In the case where the inner container is taken out from the separation container after the centrifugation and before recovering the separation subject as described above, it is preferable to take out the inner container by holding the grip portion with the through hole that allows the sample supply chamber to communicate with the outside being closed, for example. By closing the through hole as described above, the hermetic quality inside the sample supply chamber can be maintained, so that it is possible to prevent sufficiently a liquid containing impurities and the like from leaking out from the sample supply chamber.

Although the size of each of the through holes is not particularly limited, it preferably is set so that air can pass through the through hole and the entry of impurities from the outside can be prevented. Furthermore, each of the through holes may be provided in the form of a breathable filter. Examples of the breathable filter include a porous filter and a nonwoven fabric. A hydrophobic filter is preferable, and examples thereof include a filter formed of a hydrophobic polymer such as a fluorine resin and a filter coated with the hydrophobic polymer.

The use of the separation container according to the present invention is not particularly limited, and the separation container preferably is used for separating sperms from a sample, for example. In the case where the separation container according to the present invention is used for separating sperms from a sample, the separation method is not particularly limited, and the separation container can be used in the density gradient centrifugation method, the swim-up method, or the like, for example. When the separation container according to the present invention is used in the density gradient centrifugation method, it can be used not only for separation of sperms but also for separation of cell organelles, separation of DNA or RNA, separation of a specific component in blood (e.g., leukocyte), and the like, for example. When the separation container according to the present invention is used in the swim-up method, for example, a liquid is poured into the separation subject discharge chamber, sperms that have settled down on a lower portion of the separation subject discharge chamber and thus have been separated from the liquid are caused to swim in the liquid to float up to an upper portion of the separation subject discharge chamber, and the sperms that have floated up can be collected and recovered. In the present invention, the centrifugal treatment solution is not particularly limited, and a liquid to be poured into the container main body at the time of centrifugation can be used, for example. Specific examples of the centrifugal treatment solution include: density gradient carriers (media) such as Percoll; media; and buffer solutions. Examples of the media include liquids suitable for a separation subject such as sperms. Furthermore, in the case of the swim-up method, it is preferable to pour, for example, a liquid in which sperms can swim to the separation subject discharge chamber as the above-described liquid, and examples of such a liquid include the media described above. Specific examples of the media include liquids containing HEPES.

### <Attachment>

Next, an attachment of the present invention is an attachment to be used in the separation container according to the present invention, wherein
the attachment has a dividing portion,
the dividing portion has a partition formed along the axial direction of the container main body,
an inner space of the container main body can be divided into two or more chambers by the partition,
at least one of the two or more chambers formed by the division of the inner space by the partition of the dividing portion serves as a sample supply chamber,
at least one remaining chamber serves as a separation subject discharge chamber, and
the sample supply chamber and the separation subject discharge chamber can communicate with each other in lower portions thereof.

Examples of the attachment of the present invention include first to fourth attachments described in the following. It is to be noted, however, the attachment of the present invention is by no means limited thereto.

The first attachment of the present invention is characterized in that it has a planar partition having substantially the same shape as a cross sectional shape of the inner space of the container main body, and can be used in the first separation container of the present invention.

One embodiment of the first attachment of the present invention is such that:
the partition is a planar partition having substantially the same shape as a cross sectional shape of the inner space of the container main body,
a through hole is formed in a lower portion of the partition, and
the sample supply chamber and the separation subject discharge chamber can communicate with each other via the through hole.

Another embodiment of the first attachment of the present invention is such that, for example, instead of or in addition to the through hole formed in the lower portion of the partition, a through hole is formed by a lower bottom side of the partition and an inner wall of the container main body when the attachment is disposed in the container main body. That is, the first attachment of the present invention may be such that, for example, the partition is a planar partition having substantially the same shape as a cross sectional shape of the inner space of the container main body, a height of the partition is shorter than a depth of the container main body, a through hole is formed by a lower bottom side of the partition and an inner wall of the container main body below the lower bottom side of the partition, and the sample supply chamber and the separation subject discharge chamber can communicate with each other via the through hole.

The first attachment of the present invention may be configured so that the partition can be disposed on the sample supply chamber side relative to a center in a radial direction in the container main body, and the partition has a shape inclined from a certain point in a longitudinal direction thereof toward the sample supply chamber side. According to the present embodiment, for example, when the separation container using the attachment of the present invention is applied to washing and concentration of sperms by the swim-up method, it is possible to improve further the recovery efficiency of mature sperms.

In the first attachment of the present invention, it is preferable that the dividing portion further includes a partition fixing portion and that the partition can be supported and fixed inside the container main body by the partition fixing portion. The partition may be supported and fixed in the container main body by, for example, the partition itself. However, by supporting and fixing the partition additionally using the partition fixing portion, the occurrence of the dropping-off at the time of centrifugation can be prevented more reliably, for example.

The second attachment of the present invention is characterized in that the dividing portion has a first inner container described below, and can be used in the second separation container of the present invention.

The second attachment of the present invention is configured so that, for example,
the dividing portion has a first inner container,
the inner container is a tubular container that is elongated in an axial direction and has an outer diameter and a height that allow the inner container to be inserted into the container main body,
an upper portion of the inner container is open, and a lower portion of the inner container is open or a through hole is formed in the lower portion of the inner container,
a shape of a part of an outer peripheral surface of the inner container is substantially the same as a shape of a part of an inner peripheral surface of the container main body,
a remaining portion of the outer peripheral surface of the inner container has a flat shape,
a side wall of the inner container with the flat shape is the partition,
the inner container can be disposed in the container main body in a state where the part of the outer peripheral surface of the inner container and the part of the inner peripheral surface of the container main body having the same shape are in contact with each other and the portion having the flat shape in the outer peripheral surface of the inner container is apart from a portion of the inner peripheral surface of the container main body other than the same shape part at a certain distance,
the inner container has an inner container fixing portion, and the inner container can be supported and fixed in the container main body by the inner container fixing portion,
a chamber inside the inner container serves as the sample supply chamber, and
a chamber formed by the portion having the flat shape in the outer peripheral surface of the inner container and the portion of the inner peripheral surface of the container main body other than the part in contact with the outer peripheral surface of the inner container serves as the separation subject discharge chamber.

In the second attachment of the present invention, the portion having the flat shape in the outer peripheral surface of the inner container may have a shape inclined from a certain point in the axial direction toward an inside of the inner container. According to the present embodiment, when the separation container using the attachment of the present invention is applied to, for example, washing and concentration of sperms by the swim-up method, it is possible to further improve the recovery efficiency of mature sperms.

The third attachment of the present invention is characterized in that the dividing portion has a second inner container described below, and can be used in the third separation container of the present invention.

The third attachment of the present invention is configured so that, for example,
the dividing portion has a second inner container,
the inner container is a tubular container that is elongated in an axial direction and has an outer diameter smaller than an inner diameter of the container main body and a height smaller than a depth of the container main body,
an upper portion of the inner container is open, and a lower portion of the inner container is open or a through hole is formed in the lower portion of the inner container,
an entire side wall of the inner container is the partition,
the inner container can be disposed in the container main body in a state where an outer peripheral surface of the inner container is apart from an inner peripheral surface of the container main body at a certain distance,
the inner container has an inner container fixing portion, and the inner container can be supported and fixed in the container main body by the inner container fixing portion,
a chamber inside the inner container serves as the sample supply chamber, and
a chamber formed by an outer peripheral surface of the inner container and an inner peripheral surface of the container main body serves as the separation subject discharge chamber.

The fourth attachment of the present invention is characterized in that it has a third inner container described below instead of the dividing portion, and can be used in the fourth separation container of the present invention.

The fourth attachment of the present invention is configured so that, for example,
the separation container has a third inner container instead of the dividing portion,
the inner container is a tubular container that is elongated in the axial direction and has an outer diameter and a height that allow the inner container to be inserted into the container main body,
an upper portion of the inner container is open, and a lower portion of the inner container is open or a through hole is formed in the lower portion of the inner container,
a shape of an outer peripheral surface of the inner container is substantially the same as a shape of an inner peripheral surface of the container main body,
when the inner container is inserted into the container main body, the outer peripheral surface of the inner container abuts against the inner peripheral surface of the container main body, whereby the inner container can be supported and fixed inside the container main body,
the inner container has a positive pressure generating portion, and
the positive pressure generating portion freely can be attached to and detached from the opening in the upper portion of the inner container.

The attachment of the present invention further may include a grip portion, and it is preferable that the grip portion is exposed to the outside of the container main body when the attachment is attached to the container main body, for example. The operation of attaching/detaching the attachment to/from the container main body can be conducted more easily by holding the exposed grip portion.

The attachment of the present invention further may include a lid portion that can close the opening at the upper end. By providing the lid portion, for example, it is possible to prevent more reliably the centrifugal treatment solution, the sample, and the like added to the separation container to which the attachment is attached from scattering to the outside and also prevent impurities from entering the separation container from the outside.

For example, the lid portion may be in the form of being partially joined to the inner container, or may be a member that is different from the inner container and to be attached to the inner container when it is used. It is preferable that the lid portion to be attached to the inner container can close the opening at the upper end of the container main body by being attached to the inner container, for example. The way of attaching the lid portion is not particularly limited, and may be achieved by allowing the lid portion to be screwed in, to mesh with, to be fitted in, or to be in pressure contact with the member on which it is to be attached, for example.

As will be described later, it is preferable to take out the attachment of the present invention from the container main body after centrifugation. By taking out the attachment, a collection tube for recovering a separation subject can be inserted into the container main body from the outside more easily. Moreover, it is possible to reduce the amount of the centrifugal treatment solution to be added to the separation subject discharge chamber of the container main body. At this time, it is preferable that a liquid (e.g., a sample containing impurities or the like) remaining in the sample supply chamber inside the attachment is prevented from entering the centrifugal treatment solution containing a separation subject inside the container main body from the through hole or the opening in the lower portion of the attachment by taking out the attachment, for example. Thus, in the case where such a method is employed, it is preferable that, by attaching the lid portion to the attachment, the opening in the upper portion of the attachment is substantially closed through the contact with the lid portion. According to such an embodiment, the hermetic quality inside the attachment can be maintained, so that it is possible to sufficiently prevent the liquid containing impurities in the sample supply chamber inside the attachment from leaking out from the through hole or the opening in the lower portion of the attachment.

In the case where the attachment of the present invention has the grip portion exposed from the container main body as described above, the through hole may be provided in the grip portion. Examples of the through hole include a through hole that allows the sample supply chamber to communicate with the outside of the separation container and a through hole that allows the separation subject discharge chamber to communicate with the outside of the separation container. Either one of the former and latter through holes may be provided. However, it is preferable to provide both the through holes. Regarding the through holes, the explanation provided above as to the through holes of the separation container according to the present invention also applies.

The use of the attachment of the present invention is not particularly limited, and the attachment preferably is used for separating sperms from a sample, as in the case of the separation container according to the present invention. In the case where the separation container using the attachment of the present invention is used for separating sperms from a sample, the separation method is not particularly limited, and the separation container can be used in the density gradient centrifugation method, the swim-up method, or the like, for example. When the separation container according to the present invention is used in the density gradient centrifugation method, it can be used not only for separation of sperms but also for separation of cell organelles, separation of DNA or RNA, separation of a specific component in blood (e.g., leukocyte), and the like, for example. When the separation container according to the present invention is used in the swim-up method, for example, a liquid is poured into the separation subject discharge chamber, sperms that have settled down on a lower portion of the separation subject discharge chamber and thus have been separated from the liquid are caused to swim in the liquid to float up to an upper portion of the separation subject discharge chamber, and the sperms that have floated up can be collected and recovered. In the present invention, the centrifugal treatment solution and the liquid to be used in the swim-up method are not particularly limited and may be the same as those described above.

### <Separation Method>

A separation method according to the present invention is a method for separating a separation subject from a sample and is characterized in that the separation container according to the present invention is used therein. In the following, the separation method of the present invention will be described with reference to examples where the first, second, third, or fourth separation container of the present invention is used.

First, a first separation method of the present invention is a method in which the above-described first, second, or third separation container of the present invention is used. Specifically, the first separation method of the present invention includes the steps of:
(A) adding a centrifugal treatment solution to both the sample supply chamber and the separation subject discharge chamber of the first, second, or third separation container of the present invention;
(B) supplying the sample to the sample supply chamber of the step (A);
(C) centrifuging the separation container having undergone the step (B), whereby the separation subject is caused to move from the sample to a lower portion of the separation subject discharge chamber and thus is separated from the sample; and
(D) in the separation container having undergone the step (C), inserting a collection tube into the separation subject discharge chamber from the opening of the separation container, collecting the separation subject in the separation subject discharge chamber with the collection tube, and recovering the separation subject to the outside of the container main body.

In the present invention, the centrifugal treatment solution is not particularly limited, and examples thereof include, as described above, density gradient carriers such as Percoll, liquids suitable for a separation subject such as sperms, liquids in which sperms can swim, and buffer solutions. This applies to other separation methods described below.

The first separation method of the present invention preferably is applied to the density gradient centrifugation method, for example. In this case, in the first separation method of the present invention, the centrifugal treatment solution preferably is a density gradient carrier described above. Furthermore, in the step (B), it is preferable that the sample is layered on the density gradient carrier in the sample supply chamber.

The first separation method of the present invention preferably is applied to the recovery of sperms as the separation subject from a sample, for example. When the separation subject is sperms, the sample is not particularly limited, and may be a sample containing sperms. Examples of the sample include semen, testicular tissues, and samples containing these. It is preferable that the sample is semen.

Regarding the first separation method of the present invention, examples where the first separation method is applied to the separation of sperms will be described as second, third, and fourth separation method. It is to be noted, however, the present invention is by no means limited to these embodiments.

One embodiment of the second separation method of the present invention is such that the separation subject is sperms, and, for example, the steps (C) and (D) are the following steps (C2) and (D2):
(A) adding a centrifugal treatment solution to both the sample supply chamber and the separation subject discharge chamber of the first, second, or third separation container of the present invention;
(B) supplying the sample to the sample supply chamber of the step (A);
(C2) centrifuging the separation container having undergone the step (B), whereby the sperms in the sample are caused to settle down in a lower portion of the sample supply chamber; and
(D2) in the separation container having undergone the step (C2), inserting a collection tube into the separation subject discharge chamber from the opening of the separation container, collecting the sperms in the separation subject discharge chamber with the collection tube, and recovering the sperms to an outside of the container main body.

The second separation method of the present invention is an embodiment where the density gradient method is applied to the separation method, for example. In this case, the centrifugal treatment solution preferably is a density gradient carrier such as Percoll, for example, and in the step (B), it is preferable to layer the sample on the density gradient carrier in the sample supply chamber.

One embodiment of the third separation method of the present invention is such that the separation subject is sperms, and, for example, the steps (C) and (D) are the following steps (C3) and (D3):
(A) adding a centrifugal treatment solution to both the sample supply chamber and the separation subject discharge chamber of the first, second, or third separation container of the present invention;
(B) supplying the sample to the sample supply chamber of the step (A);
(C3) centrifuging the separation container having undergone the step (B), whereby the sperms in the sample are caused to settle down in a lower portion of the sample supply chamber; and
(D3) in the separation container having undergone the step (C3), collecting and recovering the sperms that have swum up from the lower portion of the sample supply chamber to an upper portion of the separation subject discharge chamber.

The third separation method of the present invention is an embodiment where the swim-up method is applied to the separation method, for example.

In the third separation method, for example, the steps (C3) and (D3) may be the following steps (C3') and (D3').
(C3') after the centrifugation, removing the centrifugal treatment solution as a supernatant and then adding a liquid in which sperms can swim to both the sample supply chamber and separation subject discharge chamber; and
(D3') in the separation container having undergone the step (C3'), collecting and recovering the sperms that have swum up from the lower portion of the sample supply chamber to an upper portion of the separation subject discharge chamber in the separation container.

The present embodiment is an embodiment where the combination of the density gradient method and the swim-up method is applied to the separation method, for example. By removing the centrifugal treatment solution after conducting the density gradient method and then adding the liquid as described above, washing and recovery of mature sperms can be performed more efficiently. In this case, the centrifugal treatment solution preferably is a density gradient carrier such as Percoll, for example. Furthermore, the liquid to be added in the step (C3') is not particularly limited as long as sperms can swim in the liquid, and examples of the liquid include the above-described media for sperms.

Furthermore, when the second separation container of the present invention having the first inner container or the third separation container of the present invention having the second inner container is used in the separation method according to the present invention, it is preferable to conduct the following process, for example. That is, after the step (C) in which the centrifugation is performed and before the step (D) in which the separation subject is collected, it is preferable to take out the inner container to the outside of the separation container in the state where the hermetic quality inside the inner container of the separation container is maintained By taking out each type of inner container from the separation container according to the present invention, the separation subject discharge chamber in the container main body becomes larger, which allows the insertion of the collection tube in the step (D) to be conducted more easily. This also allows the amount of the centrifugal treatment solution to be added to the separation subject discharge chamber to be reduced further. Moreover, since the inner container has the sample supply chamber inside, by taking out the inner container while maintaining the hermetic quality in the inner container, it is possible to prevent the liquid in the sample supply chamber from leaking into the separation subject discharge chamber in the container main body. Accordingly, it is possible to prevent sufficiently the centrifugal treatment solution in the separation subject discharge chamber from being contaminated with sample-derived impurities and the like in the sample supply chamber.

In the embodiment where the inner container is taken out as described above, the separation container according to the present invention preferably is configured so that, for example, it further includes a lid portion, and the lid portion can close/open the upper end of the container main body of the separation container by attaching to/detaching from the opening of the inner container. In this case, it is preferable to take out the inner container to the outside of the separation container in the state where the lid portion is attached to the inner container. Furthermore, as described above, the separation container may have a through hole that allows the sample supply chamber to communicate with the outside of the separation container and a through hole that allows the separation subject discharge chamber to communicate with the outside of the separation container. When the separation container according to the present invention has the through holes as described above, it is preferable to take out the inner container from the container main body in the state where the through hole that allows the sample supply chamber to communicate with the outside is closed, for example.

One embodiment of the fourth separation method of the present invention is such that: the separation subject is sperms; the steps (C) and (D) are the following steps (C4) and (D4), for example; and the method further includes the steps (E) to (G).
(A) adding a centrifugal treatment solution to both the sample supply chamber and the separation subject discharge chamber of the first, second, or third separation container of the present invention;
(B) supplying the sample to the sample supply chamber of the step (A);
(C4) centrifuging the separation container having undergone the step (B), whereby the sperms in the sample are caused to settle down in the lower portion of the sample supply chamber;
(D4) in the separation container having undergone the step (C4), inserting the collection tube into the lower portion of the separation subject discharge chamber from the opening of the separation container, collecting a sperm-containing seminal solid present in the lower portion of the separation subject discharge chamber with the collection tube, and taking out the collection tube from the container main body with the sperm-containing seminal solid being held in the collection tube;
(E) adding a liquid to both a sample supply chamber and a separation subject discharge chamber of the first, second, or third separation container of the present invention as another separation container that is different from the separation container used in the step (A);
(F) in the separation container having undergone the step (E), inserting the collection tube having undergone the step (D) to a lower portion of the sample supply chamber from the opening of the separation container and discharging the sperm-containing seminal solid in the collection tube to the lower portion of the sample supply chamber; and
(G) in the separation container having undergone the step (F), collecting and recovering sperms that have swum up from the lower portion of the sample supply chamber to an upper portion of the separation subject discharge chamber.

The present embodiment is an embodiment where, for example, after the density gradient centrifugation method is applied to one separation container, the swim-up method is applied to another separation container.

Next, a fifth separation method of the present invention is a method using the above-described fourth separation container of the present invention. Specifically, one embodiment of the fifth separation method of the present invention is such that the method includes the above-described steps (A) to (D) and the step (D) is the following step (D5). (A) adding a centrifugal treatment solution to both the sample supply chamber and the separation subject discharge chamber of the first, second, or third separation container of the present invention;
(B) supplying the sample to the sample supply chamber of the step (A);
(C) centrifuging the separation container having undergone the step (B), whereby the separation subject is caused to move from the sample to a lower portion of the separation subject discharge chamber and thus is separated from the sample; and
(D5) in the separation container having undergone the step (C), attaching the positive pressure generating portions to the opening in the upper portion of the inner container, taking out the inner container from the container main body, and recovering the separation subject by discharging the separation subject from the opening in the lower portion of the inner container using a pressure generated by the positive pressure generating portions.

In the fifth separation method of the present invention, the separation subject is not particularly limited, and preferably is sperms as in the first separation method. Furthermore, the sample to be used in the present embodiment is not particularly limited and may be the same as described above.

In the present invention, the density gradient carrier is not particularly limited, and examples thereof include Percoll, modified colloid silica, sucrose polymers, and Ficoll (registered trademark). The Percoll generally is in the form of colloidal silica sol having a polyvinyl pyrrolidone coating. As the Percoll, it is preferable to use Percoll from which endotoxin is removed and then isotonized by adding a medium such as a liquid containing HEPES. The concentration of Percoll is not particularly limited, and preferably is 90% to 98%, for example. In the separation method of the present invention, the condition for performing centrifugation is not particularly limited, and can be, for example, at 1000 G (1000 × 9.80665 m/s²) for 20 to 30 minutes.

In the present invention, the material used for forming the separation container is not particularly limited. Examples of the material for forming the separation container include synthetic resin materials, metallic materials, and glass materials. Among these, the synthetic resin materials are preferable from the viewpoint of workability (e.g., formability, assemblability, and, if necessary, adhesiveness etc.) of the material, hygiene (e.g., elution of an additive to a sample, and the like), functionality (e.g., visibility and the like), cost, and the like. The separation container according to the present invention includes, as constructional elements, the container main body, the partition, and the first, second, or third inner container, and optionally includes a fixing portion. They may be formed of the same material or different materials. Examples of the material forming the container main body include synthetic resins such as fluorine resins, polypropylene, polyethylene, polycarbonate, polyester, polyurethane, polymethylpentene, methacryl, ABS (acrylonitrile butadiene styrene copolymer), PET (polyethylene terephthalate), polyvinyl chloride, silicone, ethylene-vinyl acetate copolymer, synthetic rubbers, and various kinds of elastomers. Among these, fluorine resins, polypropylene, polyethylene, and polycarbonate are preferable. Among the fluorine resins, hydrophobic fluorine resins are preferable, and polytetrafluoroethylene (PTFE) is particularly preferable. Examples of the material forming the partition include synthetic resins such as fluorine resins, polypropylene, polyethylene, polycarbonate, polyester, polymethylpentene, methacryl, ABS, PET resins, and polyvinyl chloride. Among these, relatively rigid synthetic resins are preferable. By using a relatively rigid synthetic resin as a material for forming the partition, it is possible to obtain a separation container with more excellent hermetic quality. Examples of the material for forming the inner container are the same as those described for the container main body. Examples of the material for forming the fixing portion are the same as those described for the partition or the inner container.

### Examples

Hereinafter, the present invention will be described by way of examples. It is to be noted, however, the present invention is by no means limited to the following examples.

### (Example 1)

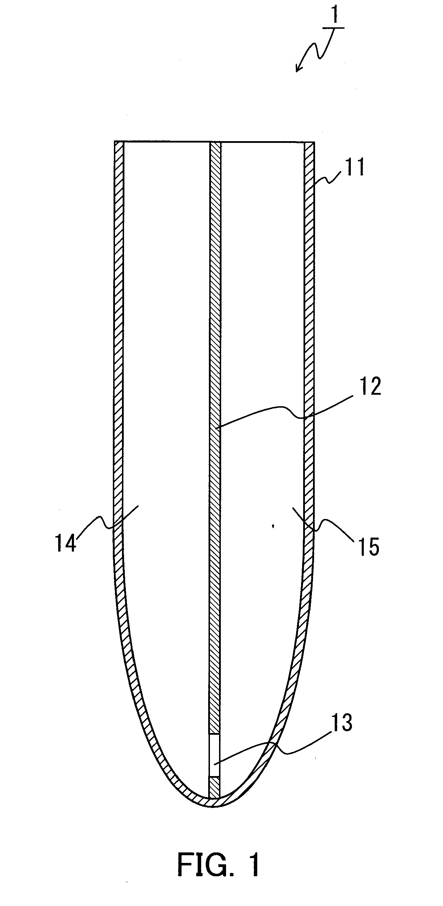

A separation container according to Example 1 of the present invention is shown in a sectional view of FIG. 1. As shown in FIG. 1, the separation container 1 according to the present example includes a container main body 11 and a partition 12. The container main body 11 is a bottomed tubular container that is elongated in the axial direction. An upper end thereof is open, the diameter of a lower end portion thereof decreases gradually toward a tip, and the tip of the lower end portion is pointed. The partition 12 is formed along the axial direction inside the container main body 11. The shape of the partition 12 is substantially the same as the interior cross-sectional shape of the container main body 11. The partition 12 has a planar shape, a lower portion thereof is tapered so that its width decreases gradually, and a tip of the lower portion is pointed. An inner space of the container main body 11 is divided into two chambers, namely, a sample supply chamber 14 and a separation subject discharge chamber 15, by the partition 12, which is disposed substantially in the middle. A through hole 13 is formed in the lower portion of the partition 12, and the sample supply chamber 14 and the separation subject discharge chamber 15 communicate with each other in their lower portions via the through hole 13. Side surfaces of the partition 12 are in contact with the container main body 11, whereby the partition 12 is supported and fixed inside the container main body 11. The contact portions between the partition 12 and the container main body 11 may be fixed by being bonded with an adhesive, for example. Alternatively, the partition 12 and the container main body 11 may be provided as different members. The partition 12 may be configured so that its width is slightly larger than the inner diameter of the container main body 11, and the partition 12 may be supported and fixed by bringing the side surfaces of the partition 12 into pressure contact with the inner peripheral surface of the container main body 11. In the present invention, in the case where the container main body 11 and the partition 12 are different members, the partition 12 may be an attachment. Furthermore, in the present invention, the container main body 11 and the partition 12 may be formed integrally. Although one through hole is formed in the partition 12 of the separation container of the present example, the present invention is not limited thereto and a plurality of through holes may be formed. For example, in the partition 12, through holes may be formed in series along the longitudinal direction of the partition 12. The same applies to examples of an inner container given below. By forming the through holes in series along the longitudinal direction of the partition as described above, when density gradient centrifugation is performed, it becomes possible to collect components present in a middle layer and an upper layer, for example. Furthermore, the shape of the through hole 13 is not particularly limited, and may be circular, polygonal, or the like, for example.

The size of the separation container according to the present invention is not particularly limited. For example, the volume of the container main body is, for example, in the range from 0.1 to 50 mL, preferably from 0.2 to 20 mL, and more preferably from 1 to 15 mL. The maximum inner diameter of the container main body (e.g., the inner diameter of the opening in the upper portion) is, for example, in the range from 5 to 30 mm. The size of the partition is determined as appropriate depending on the size of the internal shape of the container main body, for example. As described above, it is preferable that the width of the partition is slightly larger than the inner diameter of the container main body. The size of the through hole formed in the partition is not particularly limited. For example, in the case of a circular through hole, the diameter thereof is in the range from 0.05 to 5 mm, preferably from 0.1 to 3 mm, and more preferably from 0.5 to 2 mm.

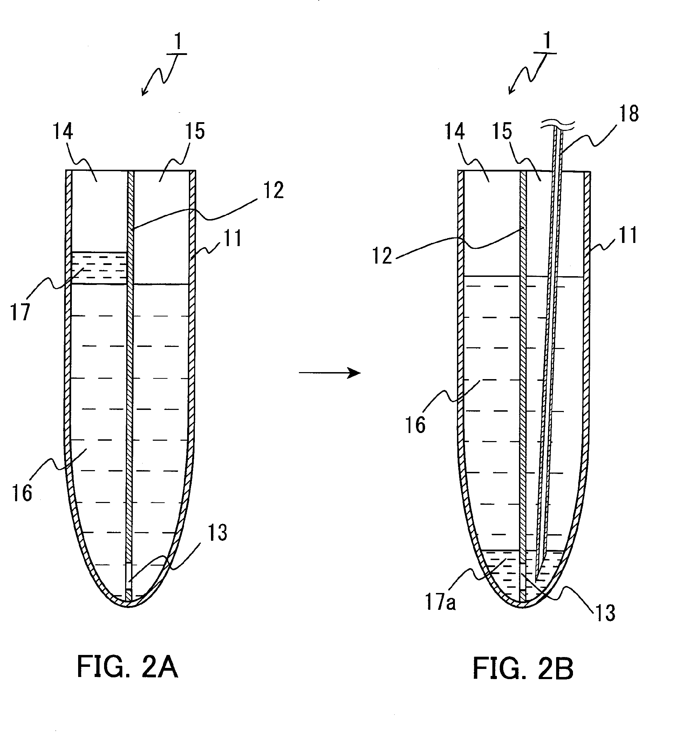

A method for separating a separation subject from a sample using the separation container of the present example will be described based on a sectional view of FIG. 2 with reference to an example where sperms are separated by a separation method using Percoll. In FIG. 2, parts identical to those in FIG. 1 are given the same reference numerals.

As shown in FIG. 2A, Percoll 16 is injected into both the sample supply chamber 14 and the separation subject discharge chamber 15 of the separation container 1 of the present example. Then, a sperm-containing sample 17 such as semen is layered on the Percoll 16 in the sample supply chamber 14. When the separation container 1 is centrifuged in this state, as shown in FIG. 2B, sperms 17a are separated from the sample 17 and sink toward the bottom of the separation container 1. However, since the sample supply chamber 14 and the separation subject discharge chamber 15 communicate with each other via the through hole 13, the sperms 17a settle down on the bottoms of both the sample supply chamber 14 and the separation subject discharge chamber 15. Then, as shown in FIG. 2B, a collection tube 18 such as a pipette is inserted from the opening in the upper portion of the separation subject discharge chamber 15, and the sperms that have settled down on the bottom of the separation subject discharge chamber 15 are collected and recovered. Thereafter, the collection tube 18 is drawn out from the separation subject discharge chamber 15. It is to be noted that the Percoll 16 present in the separation subject discharge chamber 15 does not contain impurities derived from the sample. Therefore, it is possible to prevent the sperms collected and recovered from being contaminated with the sample-derived impurities. In the above-described manner, it is possible to separate the sperms that have been prevented from being contaminated.

### (Example 2)

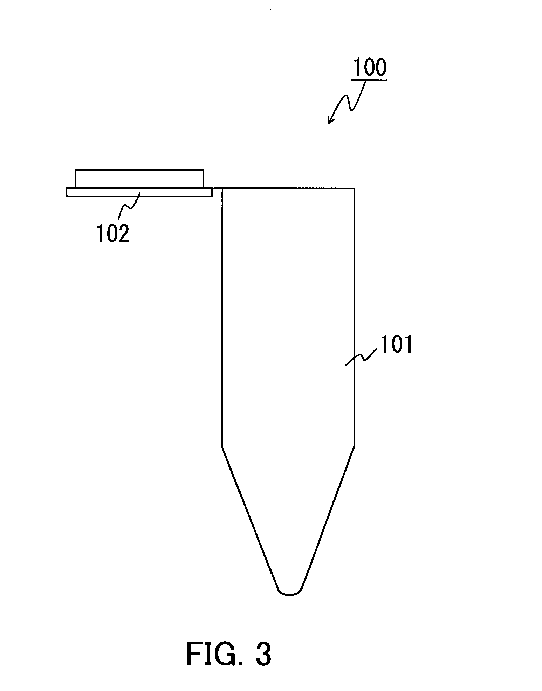

Next, a separation container according to Example 2 of the present invention is shown in FIGs. 3, 4, and 5. In FIGs. 3, 4, and 5, parts identical to those in FIGs. 1 and 2 are given the same reference numerals. In the present example, the separation container is configured by attaching an attachment to a container main body. The separation container of the present example is an example of the first separation container of the present invention, and the attachment of the present example is an example of the first attachment of the present invention.

A container main body of the present example is shown in a front view of FIG. 3. As shown in FIG. 3, the container main body 100 of the present example includes a bottomed tubular container 101 that is elongated in the axial direction and a cap 102. An upper end of the bottomed tubular container 101 is open, a lower end portion thereof is tapered toward a tip, and the tip of the lower end portion is pointed. Furthermore, the cap 102 is joined to a part of the opening in the upper portion via a joint, and the cap 102 can close the opening in the upper portion. As the container main body of the present example, a so-called centrifugation tube is applicable. Note here that the cap may be a member separated from the bottomed tubular container 101, for example. The same applies to the following examples.

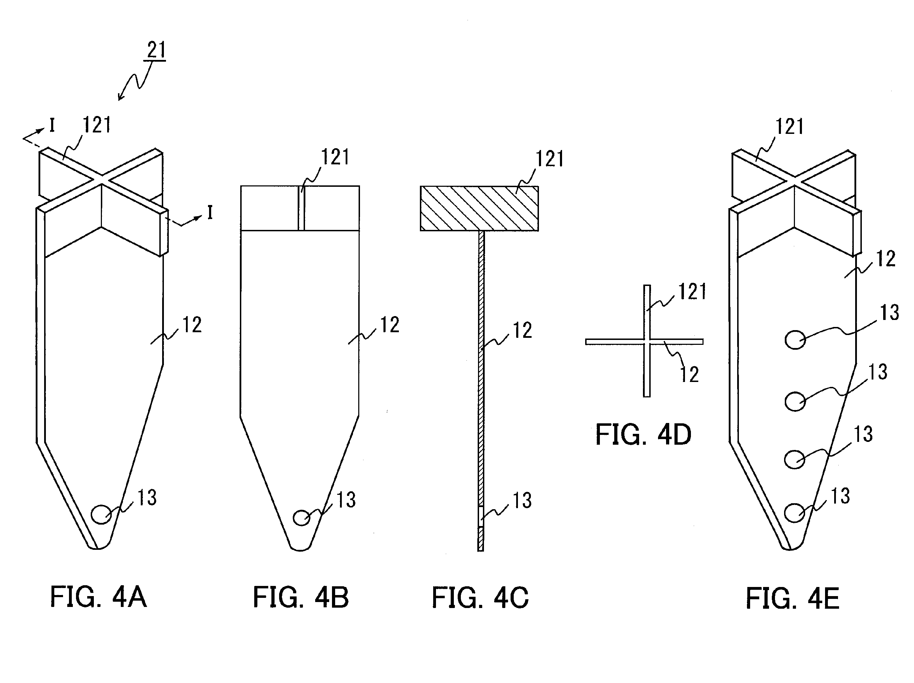

The attachment of the present example is shown in FIGs. 4A, 4B, 4C, and 4D. FIG. 4A is a perspective view of the attachment of the present example, FIG. 4B is a front view of the attachment of the present example, FIG. 4C is a sectional view taken in the arrow direction of line I-I in FIG. 4A, and FIG. 4D is a top view of the attachment of the present example. As shown in FIGs. 4A to 4D, the attachment 21 of the present example includes a planar partition 12 and a plate-like fixing member 121. The partition 12 has substantially the same shape as the interior cross-sectional shape of the bottomed tubular container 101 of the container main body 100 shown in FIG. 3. A lower portion of the partition 12 is tapered so that its width decreases gradually, and the tip of the lower portion is pointed. In the lower portion of the partition 12, one circular through hole 13 is formed. The plate-like fixing member 121 is attached to an upper portion of the partition 12 so as to protrude from both sides of the partition 12. FIG. 4E shows the attachment of the present example where a plurality of through holes 13 (four through holes in this drawing) are formed in series along the longitudinal direction of the partition 12. As described above, by forming a plurality of through holes, it becomes possible to collect and recover components present in an upper layer and a middle layer of a density gradient carrier.

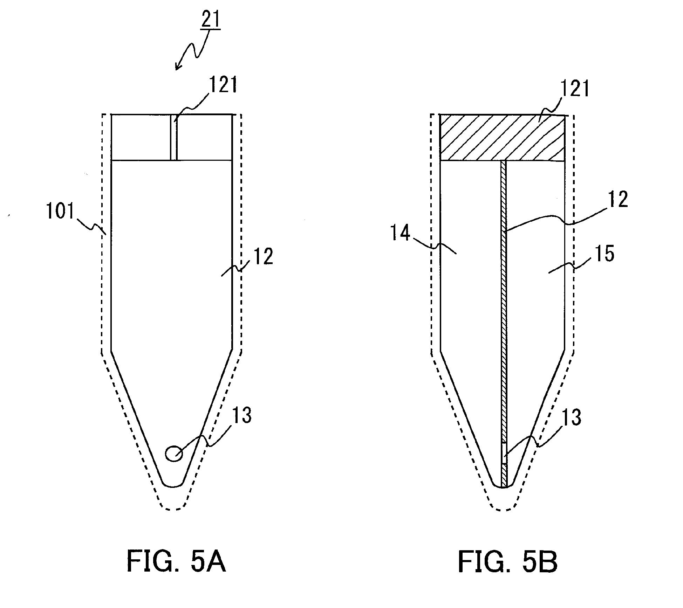

Next, an example where a separation container is configured by inserting the attachment 21 of the present example into the container main body 100 of the present example is shown in FIG. 5. In FIG. 5, regarding the container main body 100, only the bottomed tubular container 101 is shown with a dotted line in order to allow the configuration of the attachment to be understood more easily. FIG. 5A is a front view showing the state where the attachment 21 is inserted into the container main body 100, and FIG. 5B is a sectional view taken in the arrow direction of line I-I in FIG. 4A. As shown in the drawings, when the attachment 21 is inserted into the bottomed tubular container 101, side surfaces of the partition 12 abut against an inner peripheral surface of the bottomed tubular container 101, and also side surfaces of both ends of the plate-like fixing member 121 abut against the inner peripheral surface. Therefore, the partition 12 is supported and fixed firmly inside the bottomed tubular container 101. Moreover, when the size of the attachment 21 is made slightly larger than the inner diameter of the bottomed tubular container 101, the side surfaces of the partition 12 and the side surfaces of the both ends of the plate-like fixing member 121 are in pressure contact with the inner peripheral surface of the bottomed tubular container 101, whereby the partition 12 is supported and fixed still more firmly.

In the separation container of the present example, the sizes of the container main body 100 and the attachment 21 are not particularly limited, and, for example, parts having the same configurations as those in Example 1 may have the same sizes. The width of the plate-like fixing member 121 is in the range from 5 to 30 mm, for example. In the cap 102 of the container main body 100, an external shape of a portion to be inserted into the bottomed tubular container 101 may be formed so that, for example, it is the same as or slightly larger than the inner diameter of the opening in the upper portion of the bottomed tubular container 101.

A method for separating sperms utilizing Percoll to be carried out with the use of the separation container of the present example can be carried out in the same manner as in Example 1, except that the separation container is configured by inserting the attachment into the bottomed tubular container of the container main body and the opening in the upper portion of the bottomed tubular container is closed by the cap at the time of centrifugation.

### (Example 3)

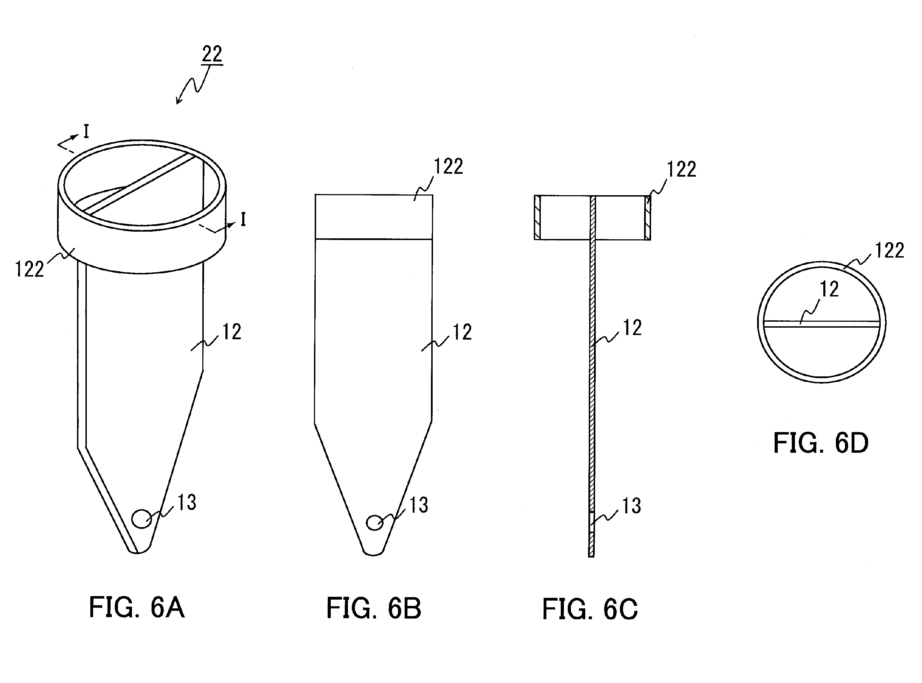

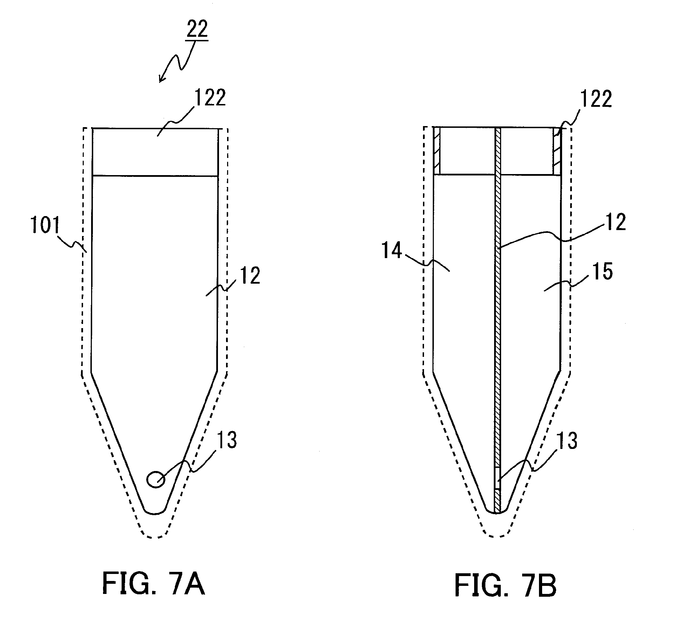

Next, a separation container according to Example 3 of the present invention is shown in FIG. 6 and FIG. 7. In FIG. 6 and FIG. 7, parts identical to those in FIGs. 1 to 5 are given the same reference numerals. In the present example, the separation container is configured by attaching an attachment to a container main body. The separation container of the present example is an example of the first separation container of the present invention, and the attachment of the present example is an example of the first attachment of the present invention.

In the present example, as a container main body, the one shown in FIG. 3 can be used as in Example 2.

The attachment of the present example is shown in FIGs. 6A, 6B, 6C, and 6D. FIG. 6A is a perspective view of the attachment of the present example, FIG. 6B is a front view of the attachment of the present example, FIG. 6C is a sectional view taken in the arrow direction of line I-I in FIG. 6A, and FIG. 6D is a top view of the attachment of the present example. As shown in FIGs. 6A to 6D, the attachment 22 of the present example has the same configuration as the attachment of Example 2, except that an annular fixing member 122 is attached to an upper portion of a partition 12 instead of the plate-like fixing member.

Next, an example where a separation container is configured by inserting the attachment 22 of the present example into the container main body 100 shown in FIG. 3 is shown in FIG. 7. In FIG. 7, regarding the container main body 100, only the bottomed tubular container 101 is shown with a dotted line in order to allow the configuration of the attachment to be understood more easily. FIG. 7A is a front view showing the state where the attachment 22 is inserted into the container main body 100, and FIG. 7B is a sectional view taken in the arrow direction of line I-I in FIG. 6A. As shown in the drawings, when the attachment 22 is inserted into the bottomed tubular container 101, side surfaces of the partition 12 abut against an inner peripheral surface of the bottomed tubular container 101, and also an entire outer peripheral surface of the annular fixing member 122 abut against the inner peripheral surface. Therefore, the partition 12 is supported and fixed firmly inside the bottomed tubular container 101. Moreover, when the size of the attachment 22 is made slightly larger than the inner diameter of the bottomed tubular container 101 as in Example 2, the side surfaces of the partition 12 and the entire outer peripheral surface of the annular fixing member 122 are in pressure contact with the inner peripheral surface of the bottomed tubular container 101, whereby the partition 12 is supported and fixed still more firmly.

In the separation container of the present example, the sizes of the container main body and the attachment are not particularly limited, and, for example, parts having the same configurations as those in Example 1 may have the same sizes. The width of the annular fixing member 122 is in the range from 5 to 30 mm, for example.

A method for separating sperms utilizing Percoll to be carried out with the use of the separation container of the present example can be carried out in the same manner as in Example 1, except that the separation container is configured by inserting the attachment into the bottomed tubular container of the container main body and the opening in the upper portion of the bottomed tubular container is closed by the cap at the time of centrifugation.

### (Example 4)

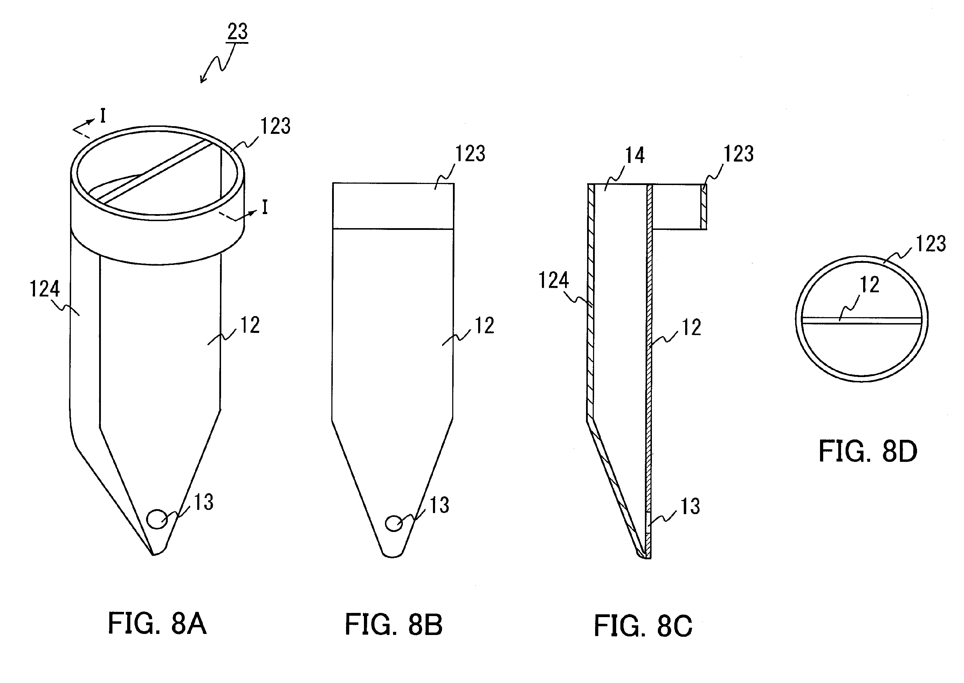

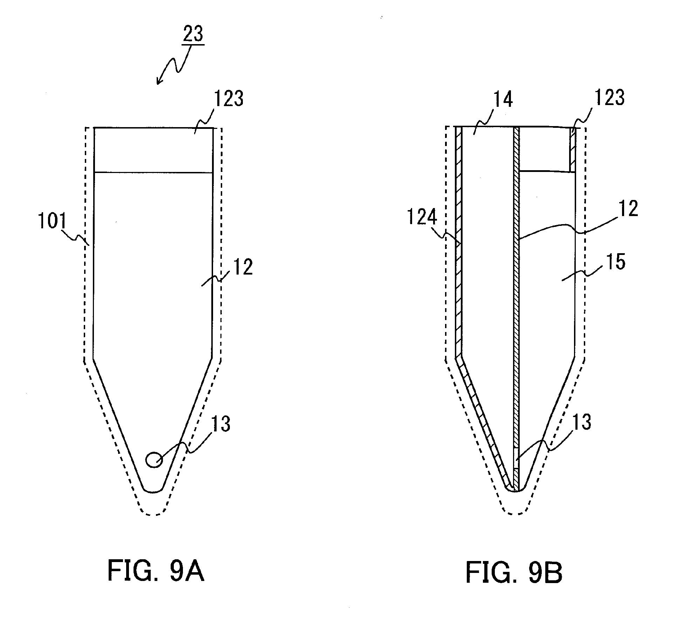

Next, a separation container according to Example 4 of the present invention is shown in FIG. 8 and FIG. 9. In FIG. 8 and FIG. 9, parts identical to those in FIGs. 1 to 7 are given the same reference numerals. In the present example, the separation container is configured by attaching an attachment to a container main body. The separation container of the present example is an example of the second separation container of the present invention, and the attachment of the present example is an example of the second attachment of the present invention.

In the present example, as a container main body, the one shown in FIG. 3 can be used as in Example 2.

The attachment of the present example is shown in FIGs. 8A, 8B, 8C, and 8D. FIG. 8A is a perspective view of an attachment of the present example, FIG. 8B is a front view of the attachment of the present example, FIG. 8C is a sectional view taken in the arrow direction of line I-I in FIG. 8A, and FIG. 8D is a top view of the attachment of the present example. As shown in FIGs. 8A to 8D, the attachment 23 of the present example is the first inner container, and the inner container is a half-round tubular container that is elongated in the axial direction. An upper portion thereof is open, a lower portion thereof is tapered toward a tip, and the tip of the lower portion is pointed. Furthermore, a through hole 13 is formed in the lower portion of the inner container. An outer peripheral curved surface 124 of a half-round portion of the half-round tubular inner container has substantially the same shape as a part of an inner peripheral surface of the bottomed tubular container 101 of the container main body 100. A flat side wall of the half-round tubular inner container is a partition 12. An annular fixing member 123 is attached to the upper portion of the inner container.

Next, an example where a separation container is configured by inserting the attachment 23 of the present example into the container main body 100 shown in FIG. 3 is shown in FIG. 9. In FIG. 9, regarding the container main body 100, only the bottomed tubular container 101 is shown with a dotted line in order to allow the configuration of the attachment to be understood more easily. FIG. 9A is a front view showing the state where the attachment 23 is inserted into the container main body 100, and FIG. 9B is a sectional view taken in the arrow direction of line I-I in FIG. 8A. As shown in the drawings, when the attachment 23 is inserted into the bottomed tubular container 101, an outer peripheral surface of the half-round portion of the inner container abuts against the inner peripheral surface of the bottomed tubular container 101, and also an entire outer peripheral surface of the annular fixing member 123 attached to the upper portion of the inner container abuts against the inner peripheral surface of the bottomed tubular container 101. This allows the attachment 23 to be supported and fixed firmly inside the container main body. An inner space of the attachment 23 as the inner container serves as a sample supply chamber 14, and a space formed by the flat side wall (the partition 12) of the inner container and a portion of the inner peripheral surface of the container main body other than a portion in contact with the inner container serves as a separation subject discharge chamber 15. Moreover, when the size of the attachment 23 is made slightly larger than the inner diameter of the bottomed tubular container 101 as in Example 2, the outer peripheral surface of the half-round portion of the inner container and the entire outer peripheral surface of the annular fixing member 123 are in pressure contact with the inner peripheral surface of the bottomed tubular container 101, whereby the attachment 23 is supported and fixed still more firmly.

In the separation container of the present example, the size of the container main body is not particularly limited, and may be the same as that of the separation container of Example 1, for example. As described above, the size of the attachment 23 preferably is made slightly larger than the inner diameter of the bottomed tubular container. Except for this, parts having the same configurations as those in Examples 1 to 3 may have the same sizes.

A method for separating sperms utilizing Percoll to be carried out with the use of the separation container of the present example can be carried out in the same manner as in Example 1, except that the separation container is configured by inserting the attachment into the bottomed tubular container of the container main body and the opening in the upper portion of the bottomed tubular container is closed by the cap at the time of centrifugation.

### (Example 5)

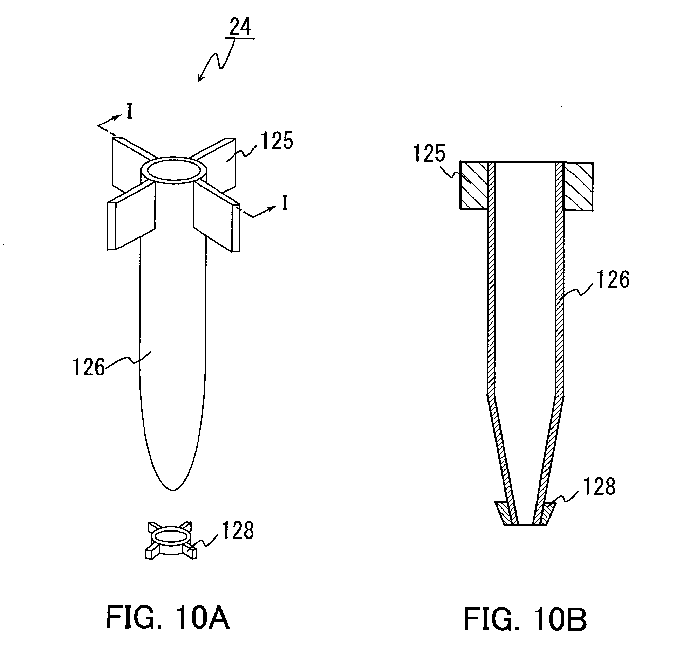

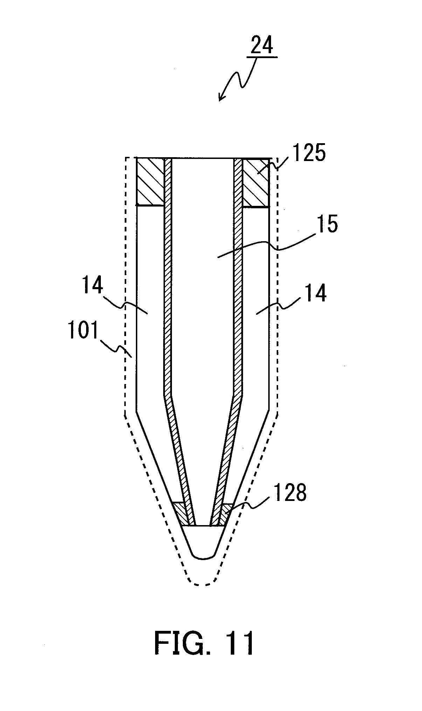

Next, a separation container according to Example 5 of the present invention is shown in FIG. 10 and FIG. 11. In FIG. 10 and FIG. 11, parts identical to those in FIGs. 1 to 9 are given the same reference numerals. In the present example, the separation container is configured by attaching an attachment to a container main body. The separation container of the present example is an example of the third separation container of the present invention, and the attachment of the present example is an example of the third attachment of the present invention.

In the present example, as a container main body, the one shown in FIG. 3 can be used as in Example 2.

The attachment of the present example is shown in FIGs. 10A and 10B. FIG. 10A is a perspective view showing the attachment of the present example, and FIG. 10B is a sectional view taken in the arrow direction of line I-I in FIG. 10A. As shown in FIGs. 10A and 10B, the attachment 24 of the present example has the above-described second inner container 126. The inner container 126 is a tubular container that is elongated in the axial direction. An upper portion thereof is open, a lower portion thereof is tapered toward a tip, and the tip of the lower portion is open. An entire side wall of the inner container 126 is a partition. The inner container 126 has an outer diameter that is smaller than the inner diameter of the container main body and a height that is smaller than the depth of the container main body. To the upper portion of the inner container 126, upper plate-like fixing members 125 are attached so as to protrude in four directions (e.g., respective directions of north, south, east, and west). In the lower portion of the inner container 126, a lower fixing member 128 configured by attaching plate-like members to an annular member so as to protrude in four directions (e.g., respective directions of north, south, east, and west) is attached in a freely detachable manner.

Next, an example where a separation container is configured by inserting the attachment 24 of the present example into the container main body 100 shown in FIG. 3 is shown in FIG. 11. In FIG. 11, regarding the container main body 100, only the bottomed tubular container 101 is shown with a dotted line in order to allow the configuration of the attachment to be understood more easily. FIG. 11 is a sectional view taken in the arrow direction of line I-I in FIG. 10A. As shown in the drawing, when the attachment 24 is inserted into the bottomed tubular container 101, the inner container is disposed inside the bottomed tubular container 101 in the state where an outer peripheral surface of the inner container 126 is supported and fixed at a certain distance from an inner peripheral surface of the bottomed tubular container 101 by the upper plate-like fixing members 125 and the lower fixing member 128. A space between the outer peripheral surface of the inner container 126 and the inner peripheral surface of the bottomed tubular container 101 serves as a sample supply chamber 14, and an inner space of the inner container 126 serves as a separation subject discharge chamber 15.

In the separation container of the present example, the size of the container main body is not particularly limited, and may be the same as that of the separation container of Example 1, for example. As described above, the attachment 24 has an outer diameter that is smaller than the inner diameter of the container main body and a height that is smaller than the depth of the container main body, and the sizes of the opening in the upper portion and the lower opening are determined as appropriate. Except for this, parts having the same configurations as those in Examples 1 to 4 may have the same sizes.

A method for separating sperms utilizing Percoll to be carried out with the use of the separation container of the present example can be carried out in the same manner as in Example 1, except that the separation container is configured by inserting the attachment into the bottomed tubular container of container main body and the opening in the upper portion of the bottomed tubular container is closed by the cap at the time of centrifugation.

### (Example 6)

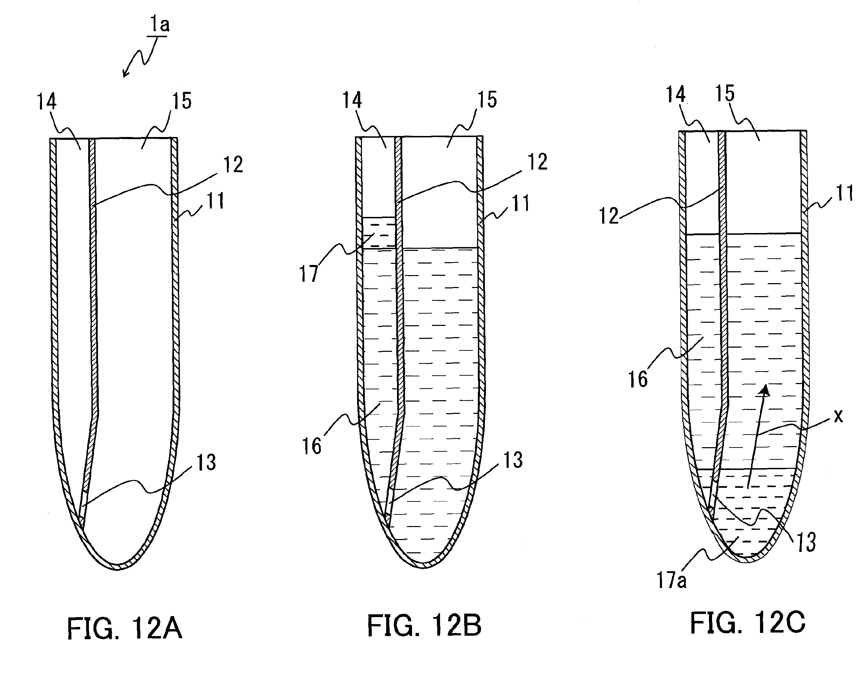

Next, a separation container according to Example 6 of the present invention is shown in FIG. 12. In FIG. 12, parts identical to those in FIGs. 1 to 11 are given the same reference numerals. The separation container of the present example is suitable for use in a swim-up method. It is to be noted, however, the separation container of the present example also is applicable to a density gradient centrifugation method.

FIG. 12A is a sectional view showing the separation container of the present example. As shown in the drawing, in the separation container 1a of the present example, a planar partition 12 is disposed on the sample supply chamber 14 side rather than in the middle, and a lower portion of the partition 12 is bent toward the sample supply chamber 14 side. Except for these, the separation container of the present example has the same configuration as the separation container shown in Example 1.

With reference to sectional views of FIG. 12B and 12C, a method for separating sperms according to a swim-up method with the use of the separation container of the present example will be described. As shown in FIG. 12B, a medium 16 such as a HEPES-containing solution is poured into both the sample supply chamber 14 and the separation subject discharge chamber 15. A sample 17 containing sperms is placed in the medium in the sample supply chamber 14. When the separation container is centrifuged in this state, sperms 17a are separated from the sample 17 and sink downward, and as shown in FIG. 12C, they settle down on the bottoms of both the sample supply chamber 14 and the separation subject discharge chamber 15. Since the partition 12 is disposed on the sample supply chamber 14 side and the lower portion of the partition 12 is bent as described above, most of the sperms settle down on the separation subject discharge chamber 15 side, which allows a subsequent swim-up step to be carried out easily. Then, the sperms that have settled down are allowed to stand, which causes the sperms that have settled down to swim in the medium to float up to the surface as shown by an arrow X in FIG. 12C. The sperms that have floated up to the surface are collected and recovered. By subjecting the sample to the centrifugation in the sample supply chamber 14 and carrying out the swim-up method in the separation subject discharge chamber 15 as described above, it is possible to prevent contamination with impurities derived from the sample at the time of recovering the sperms. At the time of centrifugation, the sperms may be caused to settle down by performing density gradient centrifugation using a density gradient carrier such as Percoll instead of the medium. After removing the density gradient carrier, the medium may be poured in the separation container and the swim-up method may be conducted. A method for separating sperms utilizing Percoll to be carried out with the use of the separation container of the present example can be carried out in the same manner as in Example 1.

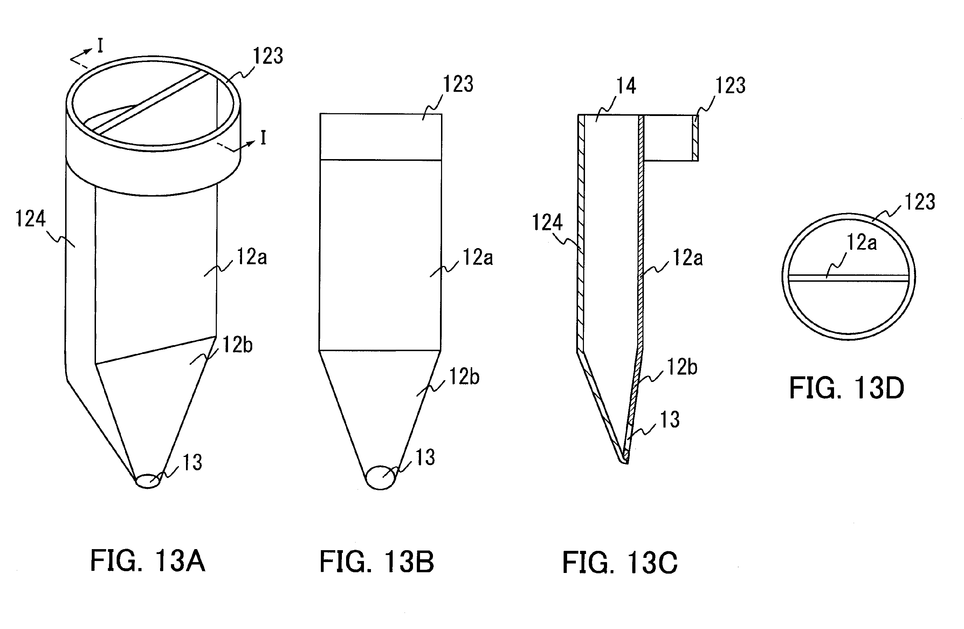

Next, an example of an attachment suitable for a swim-up method is shown in FIGs. 13, 14, 15, and 16.

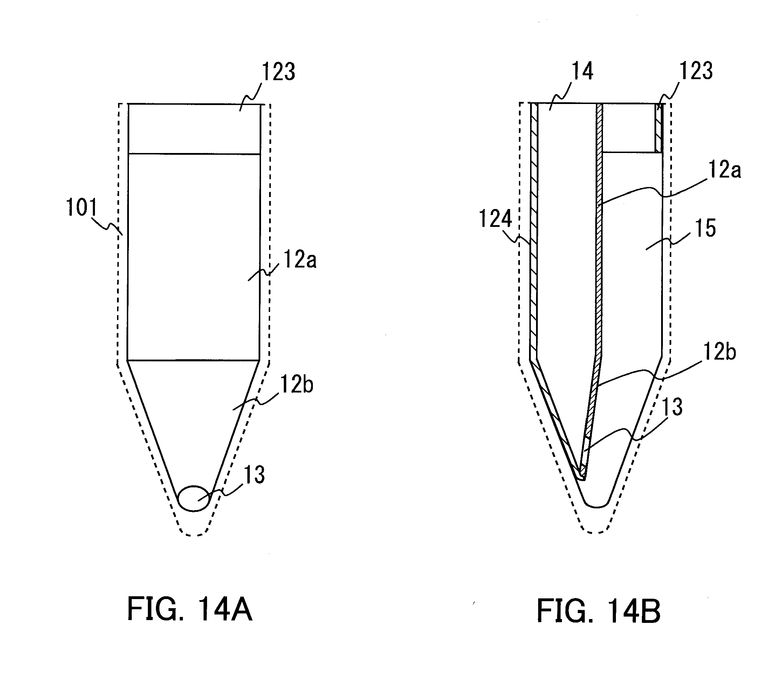

First, an example of the form of the second attachment of the present invention suitable for a swim-up method is shown in FIGs. 13 and 14. In

FIGs. 13 and 14, parts identical to those in FIGs. 1 to 12 are given the same reference numerals.

The attachment of the present example is shown in FIGs. 13A, 13B, 13C, and D. FIG. 13A is a perspective view of the attachment of the present example, FIG. 13B is a front view of the attachment of the present example, FIG. 13C is a sectional view taken in the arrow direction of line I-I in FIG. 13A, and FIG. 13D is a top view of the attachment of the present example. As shown in FIG. 13, the attachment of the present example has the same configuration as the attachment of Example 4, except that a partition of an inner container includes a parallel partition portion 12a that is parallel to the axial direction and a tapered partition portion 12b that is tapered and inclined toward an inside of the inner container.

An example where a separation container is configured by inserting the attachment of the present example into the container main body 100 shown in FIG. 3 is shown in FIG. 14. In FIG. 14, regarding the container main body 100, only the bottomed tubular container 101 is shown with a dotted line in order to allow the configuration of the attachment to be understood more easily. FIG. 14A is a front view showing the state where the attachment is inserted into the container main body 100, and FIG. 14B is a sectional view taken in the arrow direction of line I-I in FIG. 13A. As shown in the drawings, in the attachment of the present example, the partition 12b is tapered and bent toward the sample supply chamber 14 side. Thus, a space in the bottom of the separation subject discharge chamber 15 is large, which allows a large amount of sperms to settle down in the separation subject discharge chamber 15.

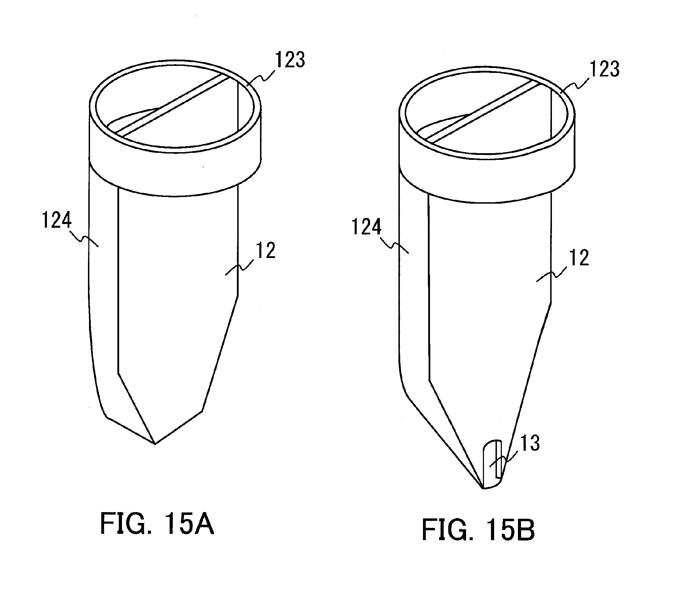

Next, an example of other forms of the second attachment of the present invention suitable for a swim-up method is shown in perspective views of FIG. 15. In FIG. 15, parts identical to those in FIGs. 1 to 14 are given the same reference numerals.

An attachment shown in FIG. 15A has the same configuration as the attachment of Example 4, except that a lower end of an inner container is open. An attachment shown in FIG. 15B has the same configuration as the attachment of Example 4, except that a large through hole 13 is formed so as to notch the tip of a lower end portion of a partition 12 of an inner container. According to the attachments in the forms shown in FIGs. 15A and 15B, it is also possible to cause a large amount of sperms to settle down on the bottom of the separation subject discharge chamber, for example.

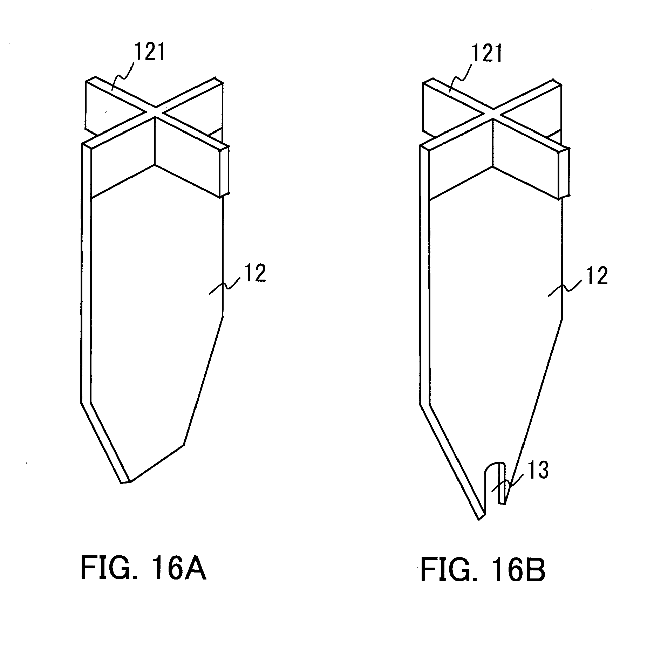

Next, an example of other forms of the first attachment of the present invention suitable for a swim-up method is shown in perspective views of FIG. 16. In FIG. 16, parts identical to those in FIGs. 1 to 15 are given the same reference numerals.

An attachment shown in FIG. 16A has the same configuration as the attachment of Example 2, except that the length of a partition 12 is shorter than the depth of a container main body. An attachment shown in FIG. 16B has the same configuration as the attachment of Example 2, except that a large through hole 13 is formed so as to notch the tip of a lower portion of a partition 12. According to the attachments in the forms shown in FIGs. 16A and 16B, it is also possible to cause a large amount of sperms to settle down on the bottom of the separation subject discharge chamber, for example.

The attachments shown in FIGs. 13, 14, 15, and 16 can be applied suitably to a swim-up method. It is to be noted, however, the present invention is not limited thereto and can be applied suitably also to a density gradient centrifugation method.

### (Example 7)

In the case where sperms are separated from semen according to the swim-up method, a sperm-containing seminal solid may sink at the time of centrifugation. In this case, the swimming and floating-up of sperms are inhibited, which makes the recovery of the sperms difficult. Moreover, if a medium or the like is led to a separation subject discharge chamber in this state, there is a risk that the seminal solid might rise up in the medium and the sperms might be contaminated with impurities. These problems can be avoided by the following method, for example. That is, first, as shown in FIG. 2A, Percoll 16 is poured to both the sample supply chamber 14 and the separation subject discharge chamber 15 of the separation container 1 shown in Example 1. Then, semen 17 is layered on the Percoll 16 in the sample supply chamber 14. When the separation container 1 is centrifuged in this state, as shown in FIG. 2B, a sperm-containing seminal solid 17a is separated from the semen 17 and sinks toward the bottom of the separation container 1. However, since the sample supply chamber 14 and the separation subject discharge chamber 15 communicate with each other via a through hole 13, the sperm-containing seminal solid 17a settles down on the bottoms of both the sample supply chamber 14 and the separation subject discharge chamber 15. Then, as shown in FIG. 2B, a collection tube 18 such as a pipette is inserted from the opening in the upper portion of the separation subject discharge chamber 15, and the sperm-containing seminal solid that has settled down on the bottom of the separation subject discharge chamber 15 is collected and recovered. Subsequently, the collection tube 18 is drawn out from the separation subject discharge chamber 15. At this time, the Percoll 16 present in the separation subject discharge chamber 15 does not contain impurities derived from the semen. Therefore, it is possible to prevent the sperm-containing seminal solid collected and recovered from being contaminated with the semen-derived impurities. In the above-described manner, the sperm-containing seminal solid that is prevented from being contaminated can be separated. Then, a medium in which sperms can swim is poured into both the sample supply chamber 14 and the separation subject discharge chamber 15 of the separation container 1a shown in FIG. 12A. Subsequently, the collection tube 18 is inserted into a lower portion of the sample supply chamber 14 from the opening of the separation container 1a, and the sperm-containing seminal solid in the collection tube 18 is discharged to the lower portion of the sample supply chamber 14. The sperm-containing seminal solid settles down on the bottoms of both the sample supply chamber 14 and the separation subject discharge chamber 15. Since the partition 12 is disposed so as to be closer to one side and the lower portion of the partition 12 is bent as described above, a large part of the sperm-containing seminal solid settles down on the separation subject discharge chamber 15 side, which allows a subsequent swim-up step to be conducted easily. Then, the sperm-containing seminal solid that has settled down is allowed to stand, which causes the sperms contained in the seminal solid in the medium to float up to the surface. The sperms that have floated up to the surface are collected and recovered. As described above, by applying a density gradient centrifugation method in one separation container and then applying a swim-up method in another separation container, sperms can be recovered easily while preventing the contamination with impurities even in the case where sperms are separated from semen.

### (Example 8)

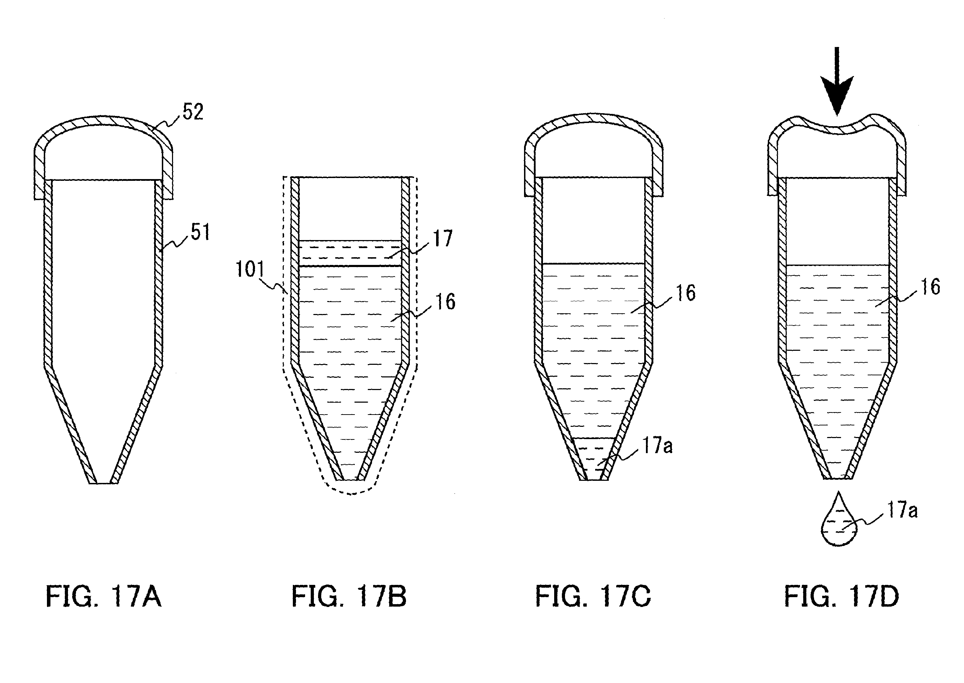

Next, a separation container according to Example 8 of the present invention is shown in FIG. 17. In FIG. 17, parts identical to those in FIG. 1 to FIG. 16 are given the same reference numerals. In the present example, a separation container is configured by attaching an attachment to a container main body. The separation container of the present example is an example of the fourth separation container of the present invention, and the attachment of the present example is an example of the fourth attachment of the present invention.

In the present example, as a container main body, the one shown in FIG. 3 can be used as in Example 2.

The attachment of the present example is shown in a sectional view of FIG. 17A. As shown in FIG. 17A, the attachment of the present example is a third inner container 51. The inner container 51 is a tubular container that is elongated in the axial direction. An upper portion thereof is open, a lower portion thereof is tapered toward a tip, and the tip of the lower portion is open. The inner container 51 has an outer diameter and a height that allows the inner container 51 to be inserted into the container main body, and the shape of an outer peripheral surface of the inner container is substantially the same as the shape of an inner peripheral surface of the container main body. To the upper portion of the inner container 51, a rubber dropper 52, which serves as a positive pressure generating portion, is attached so as to cover the opening in the upper portion. The positive pressure generating portion is not particularly limited, and examples thereof include devices that can generate a positive pressure, such as the above-described dropper.

Next, an example where a separation container is configured by inserting the attachment of the present example into the container main body shown in FIG. 3 is shown in a sectional view of FIG. 17B. In FIG. 17B, regarding the container main body 100, only the bottomed tubular container 101 is shown with a dotted line in order to allow the configuration of the attachment to be understood more easily. As shown in the drawing, when the attachment is inserted into the bottomed tubular container 101, an outer peripheral surface of the inner container 51 abuts against the inner peripheral surface of the bottomed tubular container 101, whereby the attachment is supported firmly and fixed in the container main body. For example, when the size of the attachment of the present example is made slightly larger than the inner diameter of the bottomed tubular container 101 as in Example 2, the outer peripheral surface of the inner container 51 is in pressure contact with the inner peripheral surface of the bottomed tubular container 101, whereby the attachment is supported and fixed still more firmly.

Next, a method for separating sperms using the separation container of the present example will be described. First, as shown in FIG. 17B, the attachment 51 of the present example is inserted into the bottomed tubular container 101. Percoll 16 is poured into the inner container 51, and a sample 17 containing sperms is layered on the Percoll 16. Then, centrifugation is performed in the state where the opening in the upper portion of the bottomed tubular container 101 is closed by the cap, thereby causing sperms 17a to settle down. After the centrifugation, as shown in a sectional view of FIG. 17C, the rubber dropper 52 is attached so as to close the opening in the upper portion of the inner container 51, and the inner container 51 is taken out from the bottomed tubular container 101. Then, as shown in a sectional view of FIG. 17D, the rubber dropper 52 is dented with a finger or the like to generate a positive pressure, and sperms 17a that have settled down on the bottom of the inner container 51 are discharged from the opening in the lower portion by the positive pressure and recovered. By doing so, even if sample-derived impurities are present in an upper layer and a middle layer of the Percoll, it becomes possible to recover the sperms while preventing the sample-derived impurities from contaminating the sperms.

In the separation container of the present example, the size of the container main body is not particularly limited, and may be the same as that of the separation container of Example 1, for example. As described above, the size of the attachment preferably is made slightly larger than the inner diameter of the bottomed tubular container.

### (Example 9)

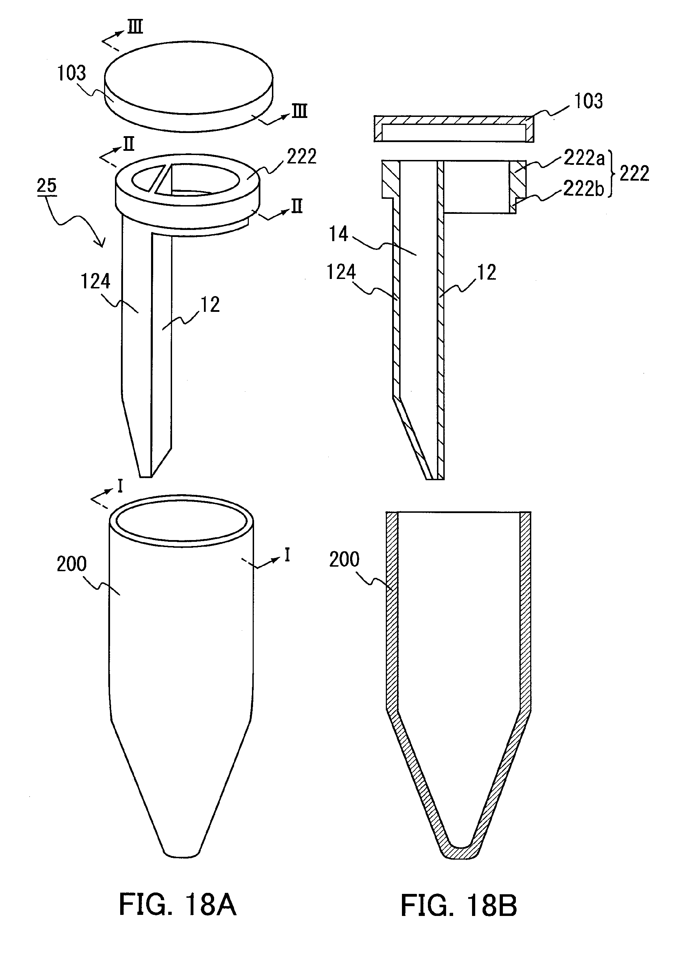

Next, a separation container according to Example 9 of the present invention is shown in FIG. 18. In FIG. 18, parts identical to those in FIG. 1 to FIG. 17 are given the same reference numerals. In the present example, a separation container is configured by attaching an attachment and a cap to a container main body. The separation container of the present example is an example of the second separation container of the present invention, and the attachment of the present example is an example of the second attachment of the present invention.

The separation container of the present example is shown in FIGs. 18A and 18B. FIGs. 18A and 18B show the state where components of the separation container of the present example, i.e., a container main body 200, an attachment 25, and a cap 103, are disassembled. FIG. 18A shows perspective views of the container main body 200, the attachment 25, and the cap 103, and FIG. 18B shows a sectional view taken in the arrow direction of line I-I of the container main body in FIG. 18A, a sectional view taken in the arrow direction of line II-II of the attachment 25 in FIG. 18A, and a sectional view taken in the arrow direction of line III-III of the cap in FIG. 18A. As shown in FIGs. 18A and 18B, in the separation container of the present example, the container main body 200 is a bottomed tubular container that is elongated in the axial direction. An upper end thereof is open, a lower end portion thereof is tapered toward a tip, and the tip of the lower end portion is pointed. The attachment 25 of the present example is the above-described first inner container. The inner container is a half-round tubular container that is elongated in the axial direction. An upper portion thereof is open, a lower portion thereof is tapered toward a tip, and the tip of the lower portion is open. An outer peripheral curved surface 124 of a half-round portion of the half-round tubular inner container has substantially the same shape as a part of an inner peripheral surface of the bottomed tubular container main body 200. A flat side wall of the half-round tubular inner container is a partition 12. An annular fixing member 222 is attached to the upper portion of the inner container. An upper portion 222a of the annular fixing member 222 is tubular, and the outer diameter of the upper portion is larger than the diameter of the opening in the upper portion of the container main body 200. On the other hand, a lower portion 222b of the annular fixing member 222 is tubular, and the outer diameter thereof preferably is slightly larger than the inner diameter of the opening in the upper portion of the container main body 200. Note here that an outer peripheral surface of the inner container 124 also serves as a part of the lower portion 222b (the left side in FIG. 18). The cap 103 can close the openings in the upper portions of the container main body 200 and the attachment 25.

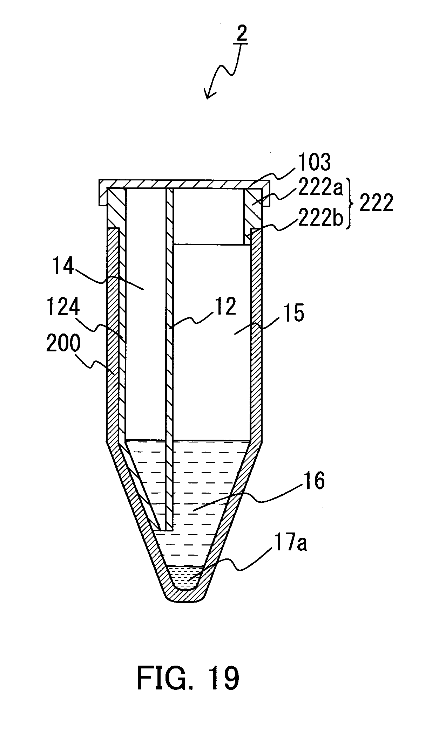

Next, an example where the separation container is configured by inserting the attachment 25 into the container main body 200 and further attaching the cap 103 is shown in FIG. 19. In FIG. 19, parts identical to those in FIG. 18 are given the same reference numerals. FIG. 19 is a sectional view of a separation container 2 in the state where the attachment 25 is inserted into the container main body 200 and further the cap 103 is attached. As shown in the drawing, when the attachment 25 is inserted into the bottomed tubular container main body 200, the outer peripheral surface 124 of the half-round portion of the inner container abuts against the inner peripheral surface of the container main body 200, and also an entire outer peripheral surface of the lower portion 222b of the annular fixing member 222 in the upper portion of the inner container abuts against the inner peripheral surface of the container main body 200. This allows the attachment 25 to be supported and fixed firmly in the container main body 200. An inner space of the inner container of the attachment 25 serves as a sample supply chamber 14, and a space formed by the flat side wall (the partition 12) of the inner container and a portion of the inner peripheral surface of the container main body other than a portion in contact with the inner container serves as a separation subject discharge chamber 15. Moreover, when the size of the attachment 25 is made slightly larger than the inner diameter of the container main body 200 as in Example 2, the outer peripheral surface of the half-round portion of the inner container and the entire outer peripheral surface of the lower portion 222b of the annular fixing member 222 are in pressure contact with the inner peripheral surface of the container main body 200, whereby the attachment 25 is supported and fixed still more firmly. Furthermore, in the present example, the upper portion 222a of the annular fixing member 222 has a shape that allows the upper portion 222a to be caught in the opening of the container main body 200, it is possible to prevent, for example, the attachment 25 from fully fitting into an inner space of the container main body 200. Furthermore, the upper portion 222a of the annular fixing member 222 is exposed from the container main body 200, and it also serves as a grip portion of the attachment 25. Since the attachment 25 can be attached/detached by holding this grip portion, the attachment 25 can be handled more easily.

In the separation container 2 of the present example, the size of the container main body 200 is not particularly limited, and may be the same as that of the bottomed tubular container 101 of Example 2, for example. As described above, it is preferable that the size of the attachment 25 is made slightly larger than the inner diameter of the bottomed tubular container. In the annular fixing member 222, the outer diameter of the tubular upper portion 222a is, for example, in the range from 5 to 50 mm, and the outer diameter of the tubular lower portion 222b is, for example, in the range from 3 to 48 mm. The cap 103 may be configured so that the inner diameter thereof is equal to or slightly smaller than the outer diameter of the upper portion 222a of the annular fixing member 222 of the attachment 25, for example. Except for these, parts having the same configurations as those in Examples 1 to 7 may have the same sizes.

A method for separating a separation subject from a sample using the separation container of the present example will be described based on a sectional view of FIG. 19 with reference to an example where sperms are separated by a separation method using Percoll. Unless otherwise stated, it can be carried out in the same manner as in Examples 1 to 7, for example.

First, as shown in FIG. 19, the attachment 25 is set inside the container main body 200. Then, Percoll 16 is poured into both the sample supply chamber 14 and the separation subject discharge chamber 15. Then, a sperm-containing sample such as semen is layered on the Percoll 16 in the sample supply chamber 14, after which the cap 103 is attached over the opening of the attachment 25. With this configuration, it is possible to prevent sufficiently the liquid in the separation container of the present example from leaking out to the outside, and also it is possible to prevent sufficiently impurities and the like from entering the separation container of the present example from the outside. When the separation container 2 is centrifuged in this state, as shown in FIG. 19, sperms 17a are separated from the sample and sink toward the bottom of the separation container 2. Subsequently, in the state where the cap 103 is attached to the attachment 25, the attachment 25 is taken out from the container main body 200. After the attachment 25 is taken out, the bottom inside the container main body as a whole serves as the separation subject discharge chamber. Then, a collection tube such as a pipette is inserted from the opening in the upper portion of the container main body 200, and the sperms that have settled down on the bottom of the container main body 200 are collected and recovered. Since the attachment 25 has been taken out as described above, a region in the container main body into which the collection tube can be inserted is expanded, whereby the operability is improved further.

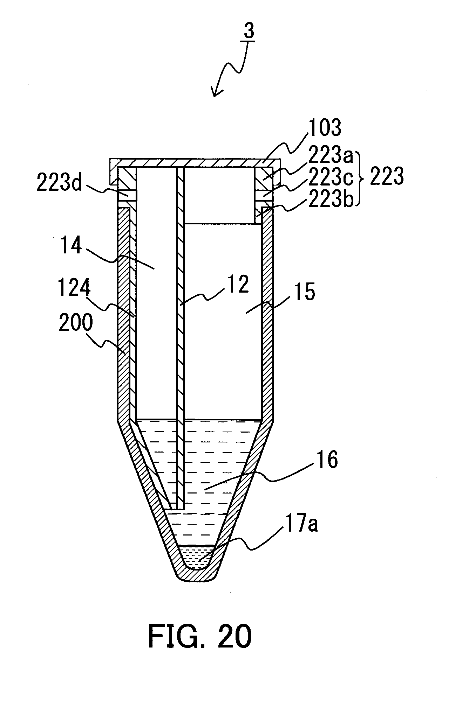

Next, an example of another form of the second separation container and the second attachment of the present invention is shown in a sectional view of FIG. 20. In FIG. 20, parts identical to those in FIG. 18 and FIG. 19 are given the same reference numerals.

In a separation container 3 shown in FIG. 20, an attachment has two through holes 223c and 223d in an upper portion 223a of an annular fixing member 223. Except for this, the separation container 3 has the same configuration as the separation container shown in FIGs. 18 and FIG. 19. In FIG. 20, the through hole 223c is a through hole that allows the separation subject discharge chamber 15 to communicate with an outside of the separation container 3, and the through hole 223d is a through hole that allows the sample supply chamber 14 to communicate with an outside of the separation container 3. The through holes 223c and 223d may be configured so that they are closable or the opening and closing state can be adjusted. By providing the through holes as described above, it is possible to adjust the pressure inside the separation container 3, specifically, the pressure inside the sample supply chamber 14 and the pressure inside the separation subject discharge chamber 15, for example.

The shape, the size, and the number of each of the through holes 223c and 223d are not particularly limited. The shape of the through hole preferably is circular, oval, or the like, for example, and may be a shape other than these. When the through hole is circular, the diameter of the through hole is 0.1 to 10 mm, for example. When the through hole has a shape other than circular, the size of the through hole is such that the longest portion of the opening is 0.1 to 10 mm, for example. Moreover, in light of simplicity in opening/closing operation, the number of the through holes preferably is such that, for example, one through hole that allows the separation subject discharge chamber 15 to communicate with the outside of the separation container 3 and one through hole that allows the sample supply chamber 14 to communicate with an outside of the separation container 3.

A method for separating a separation subject from a sample using the separation container 3 of the present example will be described based on the sectional view of FIG. 20 with reference to an example where sperms are separated by a separation method using Percoll. Unless otherwise stated, it can be carried out in the same manner as the method using the separation container shown in FIG. 19, for example.

In the case of the separation container 3 of the present example 3, centrifugation is carried out in the state where the through holes 223c and 223d are open, for example. Then, in the state where the through hole 223d that allows the sample supply chamber 14 to communicate with the outside of the separation container 3 is closed, the attachment 25 on which the cap 103 is attached is taken out from the container main body 200. At the time of the centrifugation, the air-tight state can be released because the through holes 223c and 223d are open. On the other hand, at the time of taking out the attachment 25, the hermetic quality inside the separation container 3 is maintained by closing the through hole 223d, so that it is possible to prevent liquid from leaking out from the sample supply chamber 14 of the attachment 25.

Moreover, for example, by opening and closing the through holes 223c and 223d, it is possible to discharge the separation subject remaining in a lower portion of the sample supply chamber 14 of the attachment 25 to the separation subject discharge chamber 15 after the centrifugation. In this case, centrifugation is carried out in the state where the through hole 223c and the through hole 223d, or either one of them, are closed. Then, if the separation subject remains in the sample supply chamber 14 of the attachment 25, it is possible to discharge the separation subject remaining in the lower portion of the sample supply chamber 14 to the separation subject discharge chamber 15 by opening both the through holes 223c and 223d. Subsequently, the attachment 25 may be taken out in the state where the through hole 223d is closed as described above. The pressure inside the separation container may be adjusted as described above by opening or closing the through holes completely, or it is also possible to conduct the adjustment by changing the degree by which the through holes are open or closed.

### Industrial Applicability

The separation container according to the present invention can prevent contamination with unnecessary components, is free from the dropping of its members at the time of centrifugation, is excellent in safety, and can separate a separation subject from a sample with simple operations. The separation container according to the present invention can be used preferably in the separation (e.g., washing and concentration) of sperms from a sample. It is to be noted, however, use of the separation container according to the present invention is not limited thereto, and it can be used in a wide range of application.

## Claims

1. A separation container for separating a separation subject from a sample by causing the separation subject to gather on a bottom of the separation container by centrifugation, comprising:
a container main body; and
a dividing portion,
wherein the container main body is a tubular container that is elongated in an axial direction with an upper end thereof being open and a lower end thereof being a bottom,
the dividing portion has a partition formed along the axial direction of the container main body,
an inner space of the container main body is divided into two or more chambers by the partition,
at least one of the two or more chambers formed by the division of the inner space by the partition is a sample supply chamber,
at least one remaining chamber is a separation subject discharge chamber,
the sample supply chamber and the separation subject discharge chamber can communicate with each other in lower portions thereof,
the separation container is configured so that a centrifugal treatment solution can be added to the sample supply chamber and the separation subject discharge chamber,
the separation container is configured so that a collection tube can be inserted into the separation subject discharge chamber from the opening, and
the separation subject in the separation subject discharge chamber can be collected with the collection tube and recovered to an outside of the container main body.

2. The separation container according to claim 1, wherein
the partition is a planar partition having substantially the same shape as a cross sectional shape of the inner space of the container main body,
a through hole is formed in a lower portion of the partition, and
the sample supply chamber and the separation subject discharge chamber can communicate with each other via the through hole.

3. The separation container according to claim 1, wherein
the partition is a planar partition having substantially the same shape as a cross sectional shape of the inner space of the container main body,
a height of the partition is shorter than a depth of the container main body,
a through hole is formed by a lower bottom side of the partition and an inner wall of the container main body below the lower bottom side of the partition, and
the sample supply chamber and the separation subject discharge chamber can communicate with each other via the through hole.

4. The separation container according to claim 1, wherein
the partition is disposed on the sample supply chamber side relative to a center in a radial direction in the container main body, and
the partition has a shape inclined from a certain point in a longitudinal direction thereof toward the sample supply chamber side.

5. The separation container according to claim 1, wherein
the dividing portion further comprises a partition fixing portion, and the partition is supported and fixed inside the container main body by the partition fixing portion.

6. The separation container according to claim 1, wherein
the dividing portion has a first inner container,
the inner container is a tubular container that is elongated in an axial direction and has an outer diameter and a height that allow the inner container to be inserted into the container main body,
an upper portion of the inner container is open, and a lower portion of the inner container is open or a through hole is formed in the lower portion of the inner container,
a shape of a part of an outer peripheral surface of the inner container is substantially the same as a shape of a part of an inner peripheral surface of the container main body,
a remaining portion of the outer peripheral surface of the inner container has a flat shape,
a side wall of the inner container with the flat shape is the partition, the inner container is disposed in the container main body in a state where the part of the outer peripheral surface of the inner container and the part of the inner peripheral surface of the container main body having the same shape are in contact with each other and the portion having the flat shape in the outer peripheral surface of the inner container is apart from a portion of the inner peripheral surface of the container main body other than the same shape part at a certain distance,
the inner container has an inner container fixing portion, and the inner container is supported and fixed in the container main body by the inner container fixing portion,
a chamber inside the inner container is the sample supply chamber,
and
a chamber formed by the portion having the flat shape in the outer peripheral surface of the inner container and the portion of the inner peripheral surface of the container main body other than the part in contact with the outer peripheral surface of the inner container is the separation subject discharge chamber.

7. The separation container according to claim 6, wherein
the portion having the flat shape in the outer peripheral surface of the inner container has a shape inclined from a certain point in the axial direction toward an inside of the inner container.

8. The separation container according to claim 1, wherein
the dividing portion has a second inner container,
the inner container is a tubular container that is elongated in an axial direction and has an outer diameter smaller than an inner diameter of the container main body and a height smaller than a depth of the container main body,
an upper portion of the inner container is open, and a lower portion of the inner container is open or a through hole is formed in the lower portion of the inner container,
an entire side wall of the inner container is the partition,
the inner container is disposed in the container main body in a state where an outer peripheral surface of the inner container is apart from an inner peripheral surface of the container main body at a certain distance,
the inner container has an inner container fixing portion, and the inner container is supported and fixed in the container main body by the inner container fixing portion,
a chamber inside the inner container is the sample supply chamber, and
a chamber formed by an outer peripheral surface of the inner container and an inner peripheral surface of the container main body is the separation subject discharge chamber.

9. The separation container according to claim 1, further comprising at least one of a through hole that allows the sample supply chamber to communicate with the outside of the separation container and a through hole that allows the separation subject discharge chamber to communicate with the outside of the separation container.

10. The separation container according to claim 1, wherein
the separation container has a third inner container instead of the dividing portion,
the inner container is a tubular container that is elongated in an axial direction and has an outer diameter and a height that allow the inner container to be inserted into the container main body,
an upper portion of the inner container is open, and a lower portion of the inner container is open or a through hole is formed in the lower portion of the inner container,
a shape of an outer peripheral surface of the inner container is substantially the same as a shape of an inner peripheral surface of the container main body,
when the inner container is inserted into the container main body, the outer peripheral surface of the inner container abuts against the inner peripheral surface of the container main body, whereby the inner container is supported and fixed inside the container main body,
the inner container has a positive pressure generating portion,
the positive pressure generating portion freely can be attached to and detached from the opening in the upper portion of the inner container,
the sample is supplied to the inner container in a state where the inner container is inserted into the container main body, after which the separation subject in the sample is caused to move to the lower portion of the inner container by centrifugation, and in this state, the inner container is taken out from the container main body, after which the separation subject can be discharged from the opening in the lower portion of the inner container by a pressure generated by the positive pressure generating portion.

11. The separation container according to claim 1, further comprising a lid portion,
wherein the lid portion can close the opening in the upper end of the container main body.

12. The separation container according to claim 1, to be used for separation of a sperm from a sample.

13. The separation container according to claim 12, wherein
when a liquid is poured into the separation subject discharge chamber, the sperm that has settled down in a lower portion of the separation subject discharge chamber and thus has been separated swims in the liquid to float up to an upper portion of the separation subject discharge chamber, and the sperm that has floated up to the upper portion can be collected and recovered.

14. An attachment to be used in the separation container according to claim 1, wherein
the attachment has a dividing portion,
the dividing portion has a partition formed along the axial direction of the container main body,
an inner space of the container main body can be divided into two or more chambers by the partition,
at least one of the two or more chambers formed by the division of the inner space by the partition of the dividing portion serves as a sample supply chamber,
at least one remaining chamber serves as a separation subject discharge chamber, and
the sample supply chamber and the separation subject discharge chamber can communicate with each other in lower portions thereof.

15. The attachment according to claim 14, wherein
the partition is a planar partition having substantially the same shape as a cross sectional shape of the inner space of the container main body,
a through hole is formed in a lower portion of the partition, and
the sample supply chamber and the separation subject discharge chamber can communicate with each other via the through hole.

16. The attachment according to claim 14, wherein
the partition is a planar partition having substantially the same shape as a cross sectional shape of the inner space of the container main body,
a height of the partition is shorter than a depth of the container main body,
a through hole is formed by a lower bottom side of the partition and an inner wall of the container main body below the lower bottom side of the partition, and
the sample supply chamber and the separation subject discharge chamber can communicate with each other via the through hole.

17. The attachment according to claim 14, wherein
the partition can be disposed on the sample supply chamber side relative to a center in a radial direction in the container main body, and
the partition has a shape inclined from a certain point in a longitudinal direction thereof toward the sample supply chamber side.

18. The attachment according to claim 14, wherein
the dividing portion further comprises a partition fixing portion, and the partition can be supported and fixed inside the container main body by the partition fixing portion.

19. The attachment according to claim 14, wherein
the dividing portion has a first inner container,
the inner container is a tubular container that is elongated in an axial direction and has an outer diameter and a height that allow the inner container to be inserted into the container main body,
an upper portion of the inner container is open, and a lower portion of the inner container is open or a through hole is formed in the lower portion of the inner container,
a shape of a part of an outer peripheral surface of the inner container is substantially the same as a shape of a part of an inner peripheral surface of the container main body,
a remaining portion of the outer peripheral surface of the inner container has a flat shape,
a side wall of the inner container with the flat shape is the partition, the inner container can be disposed in the container main body in a state where the part of the outer peripheral surface of the inner container and the part of the inner peripheral surface of the container main body having the same shape are in contact with each other and the portion having the flat shape in the outer peripheral surface of the inner container is apart from a portion of the inner peripheral surface of the container main body other than the same shape part at a certain distance,
the inner container has an inner container fixing portion, and the inner container can be supported and fixed in the container main body by the inner container fixing portion,
a chamber inside the inner container serves as the sample supply chamber, and
a chamber formed by the portion having the flat shape in the outer peripheral surface of the inner container and the portion of the inner peripheral surface of the container main body other than the part in contact with the outer peripheral surface of the inner container serves as the separation subject discharge chamber.

20. The attachment according to claim 19, wherein
the portion having the flat shape in the outer peripheral surface of the inner container has a shape inclined from a certain point in the axial direction toward an inside of the inner container.

21. The attachment according to claim 14, wherein the dividing portion has a second inner container,
the dividing portion has a second inner container,
the inner container is a tubular container that is elongated in an axial direction and has an outer diameter smaller than an inner diameter of the container main body and a height smaller than a depth of the container main body,
an upper portion of the inner container is open, and a lower portion of the inner container is open or a through hole is formed in the lower portion of the inner container,
an entire side wall of the inner container is the partition,
the inner container can be disposed in the container main body in a state where an outer peripheral surface of the inner container is apart from an inner peripheral surface of the container main body at a certain distance,
the inner container has an inner container fixing portion, and the inner container can be supported and fixed in the container main body by the inner container fixing portion,
a chamber inside the inner container serves as the sample supply chamber, and
a chamber formed by an outer peripheral surface of the inner container and an inner peripheral surface of the container main body serves as the separation subject discharge chamber.

22. The attachment according to claim 14, wherein
the separation container has a third inner container instead of the dividing portion,
the inner container is a tubular container that is elongated in the axial direction and has an outer diameter and a height that allow the inner container to be inserted into the container main body,
an upper portion of the inner container is open, and a lower portion of the inner container is open or a through hole is formed in the lower portion of the inner container,
a shape of an outer peripheral surface of the inner container is substantially the same as a shape of an inner peripheral surface of the container main body,
when the inner container is inserted into the container main body, the outer peripheral surface of the inner container abuts against the inner peripheral surface of the container main body, whereby the inner container can be supported and fixed inside the container main body,
the inner container has a positive pressure generating portion, and the positive pressure generating portion freely can be attached to and detached from the opening in the upper portion of the inner container.

23. The attachment according to claim 14, to be used for separation of a sperm from a sample.

24. A method for separating a separation subject from a sample, the method comprising the steps of:
(A) adding a centrifugal treatment solution to both the sample supply chamber and the separation subject discharge chamber of the separation container according to claim 1;
(B) supplying the sample to the sample supply chamber of the step (A);
(C) centrifuging the separation container having undergone the step (B), whereby the separation subject is caused to move from the sample to a lower portion of the separation subject discharge chamber and thus is separated from the sample; and
(D) in the separation container having undergone the step (C), inserting a collection tube into the separation subject discharge chamber from the opening of the separation container, collecting the separation subject in the separation subject discharge chamber with the collection tube, and recovering the separation subject to the outside of the container main body.

25. The separation method according to claim 24, wherein
the centrifugal treatment solution is at least one selected from the group consisting of density gradient carriers, media, and buffer solutions.

26. The separation method according to claim 24, wherein
the centrifugal treatment solution is a density gradient carrier, and in the step (B), the sample is layered on the density gradient carrier in the sample supply chamber.

27. The separation method according to claim 24, wherein
the separation subject is a sperm,
in the step (C), the separation container having undergone the step (B) is centrifuged, whereby the sperm in the sample is caused to settle down in the lower portion of the sample supply chamber; and
in the step (D), in the separation container having undergone the step (C), the collection tube is inserted into the separation subject discharge chamber from the opening of the separation container, and the sperm in the separation subject discharge chamber is collected with the collection tube and recovered to the outside of the container main body.

28. The separation method according to claim 24, wherein
the separation subject is a sperm,
in the step (C), the separation container having undergone the step (B) is centrifuged, whereby the sperm in the sample is caused to settle down in the lower portion of the sample supply chamber; and
in the step (D), in the separation container having undergone the step (C), the sperm that has swum up from the lower portion of the sample supply chamber to an upper portion of the separation subject discharge chamber is collected and recovered.

29. The separation method according to claim 28, wherein
in the step (C), after the centrifugation, the centrifugal treatment solution as a supernatant is removed and then a liquid in which a sperm can swim is added to both the sample supply chamber and separation subject discharge chamber, and
in the step (D), in the separation container having undergone the step (C), the sperm that has swum up from the lower portion of the sample supply chamber to an upper portion of the separation subject discharge chamber is collected and recovered.

30. The separation method according to claim 27, wherein
the sample is semen,
in the step (C), the separation container having undergone the step (B) is centrifuged, whereby the sperm in the sample is caused to settle down in the lower portion of the sample supply chamber,
in the step (D), in the separation container having undergone the step (C), the collection tube is inserted into the lower portion of the separation subject discharge chamber from the opening of the separation container, a sperm-containing seminal solid present in the lower portion of the separation subject discharge chamber is collected with the collection tube, and the collection tube is taken out from the container main body with the sperm-containing seminal solid being held in the collection tube, and
the method further comprises the steps of:
(E) adding a liquid in which the sperm can swim to both a sample supply chamber and a separation subject discharge chamber of another separation container according to claim 1 that is different from the separation container used in the step (A);
(F) in the another separation container having undergone the step (E), inserting the collection tube having undergone the step (D) to a lower portion of the sample supply chamber from the opening of the another separation container and discharging the sperm-containing seminal solid in the collection tube to the lower portion of the sample supply chamber; and
(G) in the another separation container having undergone the step (F), collecting and recovering a sperm that has swum up from the lower portion of the sample supply chamber to an upper portion of the separation subject discharge chamber.

31. The separation method according to claim 24, wherein
the separation container is the separation container according to claim 6 or 8, and
after the step (C) and before the step (D), the first inner container or the second inner container is taken out to the outside of the separation container in the state where hermetic quality inside the first inner container or the second inner container of the separation container is maintained.

32. The separation method according to claim 24, wherein
the separation container is the separation container according to claim 10, and
in the step (D), in the separation container having undergone the step (C), the positive pressure generating portion is attached over the opening in the upper portion of the inner container, the inner container is taken out from the container main body, and the separation subject is recovered by discharging the separation subject from the opening in the lower portion of the inner container using a pressure generated by the positive pressure generating portion.
